# EUROPEAN PATENT APPLICATION

(11) **EP 2 750 271 A1**
(43) Date of publication of application: **02.07.2014**
(21) Application number: 12275224.9
(22) Date of filing: 28.12.2012
(51) Int. Cl.: H02M 1/15, H02J 1/02, H02J 3/36

(54) **Control circuit**

(71) Applicant: Alstom Technology Ltd, 5400 Baden (CH)
(72) Inventor: Charnock, Colin Davidson, Stafford ST 17 0JZ (GB); Dyke, Kevin J., Bristol, South Gloucestershire BS35 4AX (GB); Maneiro, Jose, Stafford ST17 4FH (GB)
(74) Representative: Potter Clarkson LLP

(57) **Abstract**

A control circuit (20) comprises:
first and second terminals (22,24) for respective connection to first and second power transmission lines (26,28);
a current transmission path (30,32) extending between the first and second terminals (22,24), the current transmission path (30,32) including at least one module (36), the or each module (36) including at least one energy storage device, the current transmission path (30,32) including at least one inductor (38); and
a control unit (46) which selectively removes the or each energy storage device of the or each module from the current transmission path (30,32) to modulate a voltage across the or each inductor (38) in a filtering mode to modify current flowing through the current transmission path (30,32) and thereby filter one or more current components from the power transmission lines (26,28).

## Description

This invention relates to a control circuit.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The quality of power transmission can be improved by stabilising the DC voltage in the lines/cables in order to reduce the transient voltage applied to the lines/cables and thereby extend the longevity of the lines/cables. In addition the formation of a highly stable DC voltage reduces transducer error and improves converter control action stability in a voltage source converter that receives the highly stable DC voltage. Furthermore stabilisation of a DC voltage can be used to remove or minimise voltage or current ripple in the form of higher order harmonics that are inherently produced during the voltage conversion process.

According to an aspect of the invention, there is provided a control circuit comprising:
first and second terminals for respective connection to first and second power transmission lines;
a current transmission path extending between the first and second terminals, the current transmission path including at least one module, the or each module including at least one energy storage device, the current transmission path including at least one inductor; and
a control unit which selectively removes the or each energy storage device of the or each module from the current transmission path to modulate a voltage across the or each inductor in a filtering mode to modify current flowing through the current transmission path and thereby filter one or more unwanted current components from the power transmission lines.

The or each unwanted current component may be, for example, in the form of a harmonic current.

In use, modulation of the voltage across the or each inductor modifies the current flowing through the or each inductor and therefore the current flowing through the current transmission path. Operation of the control unit in the filtering mode to modify the current flowing through the current transmission path to take the form of one or more current components, which effectively injects an anti-phase version of the or each current component into the power transmission lines, enables the control circuit to cancel out the or each current component from the power transmission lines. In this manner the control circuit is capable of actively filtering one or more current components from the power transmission lines and thereby improve the quality of the power transmission line voltage.

For embodiments employing the use of a plurality of modules, the inclusion of a plurality of modules in the control circuit permits generation of a wide range of voltage waveforms to modify the current flowing through the current transmission path to enable the control circuit to filter different current components from the power transmission lines. This is because the current flowing through the current transmission path in the filtering mode can be modified to take the form of each of the different current components or a combined current waveform including a plurality of current components.

The or each inductor is preferably sized to match the ratings of the or each module and the power transmission lines in order to optimise the active filtering operation of the control circuit.

It will be understood that the reference to "power transmission lines" in the invention covers both AC and DC power transmission lines.

In embodiments of the invention, at least one module may further include at least one primary switching element to selectively direct current through the or each energy storage device or cause current to bypass the or each energy storage device. The construction of a module in this manner allows its primary switching element(s) to be powered by its energy storage device(s), instead of an external power source, thus resulting in a more compact control circuit.

The or each module may be configured to have bidirectional current capability, i.e. the or each module may be configured to be capable of conducting current in two directions, to improve its compatibility with the active filtering operation of the control circuit. As an example, at least one module may include a pair of primary switching elements connected in parallel with an energy storage device in a half-bridge arrangement to define a 2-quadrant unipolar module that can provide zero or positive voltage and can conduct current in two directions. As another example, at least one module may include two pairs of primary switching elements connected in parallel with an energy storage device to define a 4-quadrant bipolar module that can provide zero, positive or negative voltage and can conduct current in two directions.

Such modules provide a reliable means of selectively removing the or each energy storage device of the or each module from the current transmission path. In addition the ability of such modules to conduct current in two directions permits both injection and absorption of power into and from the power transmission lines and thereby improves the efficiency of the active filtering operation of the control circuit.

The use of modules with bidirectional voltage capability in the control circuit enables combination of the control circuit with a LCC HVDC scheme in which the polarity of the DC voltage changes when the direction of the transmitted power is inverted.

The control circuit according to the invention may further include at least one energy conversion element, wherein the control unit selectively removes the or each energy storage device of the or each module from the current transmission path in an energy removal mode to cause current to flow from the power transmission lines through the current transmission path and into the or each energy conversion element to remove energy from the power transmission lines.

The configuration of the control circuit in this manner allows it to be used as an energy removal device to remove excess energy from the power transmission lines in order to, for example, protect the lines from an overvoltage and to ensure a low voltage fault ride-through, if necessary. This is because the inclusion of the or each module in the control circuit permits active modification of the current flowing in the or each energy conversion element to correspond to the excess energy to be removed from the power transmission lines. As such, the control circuit is capable of operating in both filtering and energy removal modes without requiring the use of additional hardware, thus providing savings in terms of hardware footprint and cost.

Moreover the ability to selectively remove the or each energy storage device of the or each module from the current transmission path has been found to allow a fast transfer of energy, i.e. excess power, from the power transmission lines to the control circuit and thereby enables rapid regulation of the energy levels in the power transmission lines. This in turn permits the control circuit to respond quickly to a requirement to regulate energy levels in the power transmission lines in the event of a fault in an associated electrical network.

It will be understood that the power requirements for the filtering and energy removal modes of the control circuit can be different. The control circuit in the filtering mode typically draws a relatively low current from the power transmission lines and does not exchange real power (other than losses) with the power transmission lines. The control circuit in the energy removal mode typically draws the full power transmission line current and exchanges real power with the power transmission lines. In this regard the control circuit is preferably rated to match the power requirements for both the filtering and energy removal modes.

The control circuit may be configured in various ways to enable its operation in both filtering and energy removal modes. For example, in embodiments of the invention, the current transmission path may have first and second current transmission path portions separated by a third terminal, either or both of the first and second current transmission path portions including at least one module,
wherein the control circuit further includes:
an auxiliary terminal for connection to ground or the second power transmission line;
an energy conversion block for removing energy from the power transmission lines, the energy conversion block extending between the third and auxiliary terminals such that the energy conversion block branches from the current transmission path, the energy conversion block including at least one energy conversion element; and
a control unit which selectively removes the or each energy storage device of the or each module from the current transmission path portion.

The configuration of the control circuit in this manner, namely the arrangement of the energy conversion block with respect to the current transmission path, permits any current flowing in the energy conversion block to be blocked or minimised in the filtering mode, thus simplifying the control and improving the efficiency of the active filtering operation of the control circuit. When the control circuit is required to be operated in the energy removal mode, either or both of the first and second current transmission path portions may then be configured to allow current to flow in the energy conversion block in order to enable removal of energy from the power transmission lines.

Configuration of the control circuit to connect the auxiliary terminal to the second power transmission line allows the energy conversion block to be connected to the second power transmission line, rather than ground, and thereby allows high currents to circulate through the power transmission lines instead of the stray capacitance of the power transmission lines.

The first current transmission path portion may include at least one inductor and/or the second current transmission path portion may include at least one inductor.

In embodiments employing the use of the energy conversion block, the first current transmission path portion includes at least one first module, the or each first module including at least one first energy storage device. In such embodiments, at least one first module may include at least one primary switching element to selectively direct current through the or each first energy storage device or cause current to bypass the or each first energy storage device. As indicated above, the construction of the or each first module in this manner allows its primary switching element(s) to be powered by its energy storage device(s), instead of an external power source, thus resulting in a more compact control circuit.

In further embodiments employing the use of the energy conversion block, the second current transmission path portion may include at least one primary switching block which is switchable to selectively permit or inhibit flow of current in the second transmission path portion.

At least one primary switching block may include at least one secondary switching element. The number of secondary switching elements in the second current transmission path portion may vary depending on the required voltage rating of the second current transmission path portion.

At least one primary switching block may include a second module, the second module including at least one second energy storage device. At least one second module may include at least one primary switching element to selectively direct current through the or each second energy storage device or cause current to bypass the or each second energy storage device. As indicated above, the construction of the or each second module in this manner allows its primary switching element(s) to be powered by its energy storage device(s), instead of an external power source, thus resulting in a more compact control circuit.

In embodiments of the invention employing the use of the energy conversion block and at least one primary switching block, the control unit may selectively switch the or each primary switching block in the filtering mode to allow current to flow through the second current transmission path portion and thereby bypass the or each energy conversion element. This causes any current flowing in the or each energy conversion element to be minimised. As mentioned earlier, minimising flow of current in the or each energy conversion element in the filtering mode simplifies the control and improves the efficiency of the active filtering operation of the control circuit.

In embodiments of the invention in which the auxiliary terminal is for connection to the second power transmission line, the control circuit may be configured to minimise current flowing in the or each energy conversion element in the filtering mode as follows.

When at least one primary switching block includes at least one secondary switching element, the control unit may selectively switch the or each secondary switching element to an on-state in the filtering mode to allow current to flow through the second current transmission path portion and thereby bypass the or each energy conversion element.

For embodiments of the invention employing the use of a plurality of series-connected secondary switching elements, static voltage sharing in series-connected secondary switching elements may be achieved by connecting a R-C circuit in parallel with each secondary switching element. Although the use of R-C circuits would normally result in additional losses, the impact of these losses is minimised by the operation of the control circuit to reduce the voltage across the plurality of the series-connected secondary switching elements to zero or near-zero in the filtering mode, thus resulting in a more efficient control circuit.

When at least one primary switching block includes a second module, the control unit may selectively remove the or each second energy storage device from the second current transmission path portion in the filtering mode to allow current to flow through the second current transmission path portion and thereby bypass the or each energy conversion element.

In embodiments of the invention in which the auxiliary terminal is for connection to the second power transmission line, the control circuit may be configured to block or minimise current flowing through the second current transmission path portion in the energy removal mode in order to increase the current flowing through the energy conversion block and thereby improve the efficiency of the control circuit in removing energy from the DC power transmission lines. More particularly, the control unit may selectively switch the or each primary switching block in the energy removal mode to block or minimise current flowing through the second current transmission path portion and thereby cause current to be directed into the or each energy conversion element.

When at least one primary switching block includes at least one secondary switching element, the control unit may selectively switch the or each secondary switching element to an off-state in the energy removal mode to block current flowing through the second current transmission path portion and thereby cause current to be directed into the or each energy conversion element.

When at least one primary switching block includes a second module, the control unit may selectively switch the or each primary switching element in the or each second module of the second current transmission path portion in the energy removal mode to block or minimise current flowing through the second current transmission path portion and thereby cause current to be directed into the or each energy conversion element.

For embodiments of the invention employing the use of at least one first module and at least one primary switching block, the capability of the first current transmission path portion to modulate both voltage and current allows soft-switching of the or each primary switching block of the second current transmission path portion under zero-voltage and/or zero-current conditions during the transition of the control circuit between the filtering and energy removal modes, thus minimising switching losses.

The configuration of the control circuit to connect the auxiliary terminal to the second power transmission line and its operation results in the second current transmission path portion conducting a current that is proportionally smaller than the current flowing in the power transmission lines in the filtering mode, and a zero or near-zero current in the energy removal mode. This thereby allows the use of low current, high voltage semiconductor devices in the second current transmission path portion.

In embodiments of the invention in which the auxiliary terminal is for connection to ground, the control circuit may be configured to block or minimise current flowing through the or each energy conversion element in the filtering mode as follows.

When at least one switching block includes at least one second module, a zero or near-zero voltage may be maintained across the energy conversion block to block or minimise current flowing through the or each energy conversion element in the filtering mode. For example, the control unit may selectively remove the or each energy storage device of each module from the first and second current transmission path portions in the filtering mode to modify the voltage at the third terminal to block or minimise current flowing through the or each energy conversion element.

In embodiments of the invention in which the auxiliary terminal is for connection to ground, the control circuit may be configured to cause current to flow through the current transmission path and the or each energy conversion element in the energy removal mode as follows.

When each of the first and second current transmission path portions includes at least one module, the control unit may selectively remove the or each energy storage device of each module from the first and second current transmission path portions in the energy removal mode to generate an AC voltage (alternating voltage) waveform across the or each energy conversion element.

Optionally the control unit may selectively remove the or each energy storage device of each module from the first and second current transmission path portions in the energy removal mode to generate square voltage waveforms, e.g. 180° phase shifted square voltage waveforms, across each of the first and second current transmission path portions and thereby generate an AC voltage waveform across the or each energy conversion element. Generation of the square voltage waveforms in the energy removal mode has been found to not only reduce the peak values of the current flowing through the modules, but also permit energy balance between multiple modules of each current transmission path portion. It will be appreciated that the control unit may selectively remove the or each energy storage device of each module from the first and second current transmission path portions in the energy removal mode to generate different types of voltage waveforms across each of the first and second current transmission path portions.

In embodiments of the invention employing the use of the energy conversion block, the energy conversion block may further include at least one auxiliary switching block which is switchable to selectively inhibit flow of current in the or each energy conversion element in the filtering mode or permit flow of current in the or each energy conversion element in the energy removal mode.

In such a control circuit, selective removal of the or each energy storage device of the or each module from the current transmission path is not essential to control the removal of energy from the power transmission lines. Instead switching of the or each auxiliary switching block controls the flow of current in the or each energy conversion block and thereby the removal of energy from the power transmission lines in the energy removal mode. The use of at least one auxiliary switching block in the energy conversion block therefore permits optimisation of the structure of the current transmission path in relation to its use in the active filtering operation of the control circuit, thus providing savings in terms of hardware footprint and cost and improvements in terms of operational efficiency of the control circuit.

At least one auxiliary switching block may include at least one auxiliary switching element.

At least one auxiliary switching block may include an auxiliary module, the auxiliary module including at least one auxiliary energy storage device. At least one auxiliary module may include at least one auxiliary switching element to selectively direct current through the or each auxiliary energy storage device or cause current to bypass the or each auxiliary energy storage device.

Such auxiliary modules may be controlled to actively modify the current flowing in the or each energy conversion element to correspond to the excess energy to be removed from the power transmission lines.

Optionally at least one auxiliary module may be configured to have bidirectional current capability in the same manner as the or each module of the current transmission path as set out above.

Further optionally the or each auxiliary module may be configured to have unidirectional current capability, i.e. the or each auxiliary module may be configured to be capable of conducting current in only one direction. As an example, at least one auxiliary module may include first and second sets of series-connected current flow control elements, each set of current flow control elements including an active switching element to selectively direct current through the or each auxiliary energy storage device and a passive current check element to limit current flow through the auxiliary module to a single direction, the first and second sets of series-connected current flow control elements and the or each auxiliary energy storage device being arranged in a full-bridge arrangement to define a 2-quadrant bipolar rationalised module that can provide zero, positive or negative voltage while conducting current in a single direction.

In embodiments of the invention employing the use of at least one auxiliary switching block and at least one second module, the control unit may selectively remove each second energy storage device from the second current transmission path portion to modify the voltage at the third terminal to allow soft-switching of the or each auxiliary switching block when the or each auxiliary switching block is switched, thus minimising switching losses.

In embodiments of the invention, the current transmission path may further include at least one additional energy storage device connected in series with the or each module. In the filtering mode of the control circuit, the or each additional energy storage device provides a DC voltage while the control unit selectively removes the or each energy storage device from the current transmission path to generate an AC voltage. The inclusion of the or each additional energy storage device permits reduction of the voltage rating of the or each module, thus providing further savings in terms of hardware footprint and cost without adversely affecting the active filtering operation of the control circuit.

Preferred embodiments of the invention will now be described, by way of non-limiting examples, with reference to the accompanying drawings in which:
Figure 1 shows, in schematic form, a control circuit according to a first embodiment of the invention;
Figure 2 and 3 respectively illustrate the operation of the control circuit of Figure 1 in filtering and energy removal modes;
Figure 4a shows, in schematic form, a simulation model of the control circuit of Figure 1 for Matlab-Simulink simulation;
Figure 4b shows, in schematic form, a representation of each π-section shown in Figure 4a;
Figures 5a to 5h illustrate, in graph form, the results of the simulation model of Figure 4a;
Figure 6 shows, in schematic form, a control circuit according to a second embodiment of the invention;
Figure 7 shows, in schematic form, a control circuit according to a third embodiment of the invention;
Figure 8 shows, in schematic form, a control circuit according to a fourth embodiment of the invention;
Figures 9a and 9b respectively illustrate the operation of the control circuit of Figure 8 in filtering and energy removal modes;
Figure 10 shows, in schematic form, a simulation model of the control circuit of Figure 8 for Matlab-Simulink simulation;
Figure 11a to 11d illustrate, in graph form, the results of the simulation model of Figure 10;
Figure 12 shows, in schematic form, another simulation model of the control circuit of Figure 8 for Matlab-Simulink simulation;
Figures 13a to 13h, 14a to 14h and 15a to 15f illustrate, in graph form, the results of the simulation model of Figure 12;
Figure 16 shows, in schematic form, a control circuit according to a fifth embodiment of the invention; and
Figure 17 shows, in schematic form, a control circuit according to a sixth embodiment of the invention.

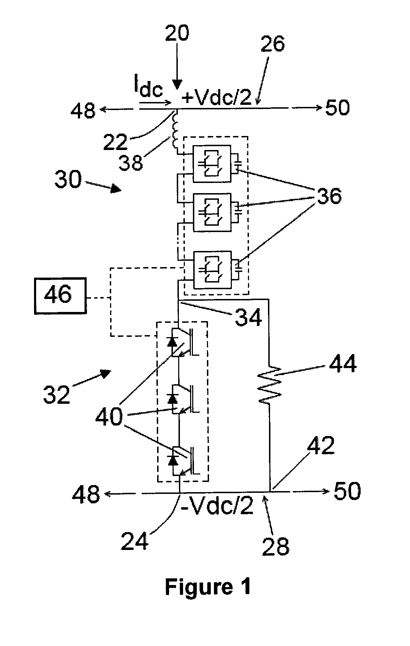

A first control circuit 20 according to a first embodiment of the invention is shown in Figure 1.

The first control circuit 20 comprises first and second terminals 22,24. In use, the first and second terminals 22,24 are respectively connected to first and second DC power transmission lines 26,28 respectively carrying a voltage of +Vdc/2 and -Vdc/2.

The first control circuit 20 further includes a current transmission path extending between the first and second terminals 22,24. The current transmission path has first and second current transmission path portions 30,32 separated by a third terminal 34.

The first current transmission path portion 30 extends between the first and third terminals 22,34, and includes a plurality of series-connected first modules 36 connected in series with a first inductor 38. Each first module 36 includes two pairs of primary switching elements connected in parallel with an energy storage device in the form of a first capacitor. The pairs of primary switching elements and the first capacitor are connected in a full-bridge arrangement to define a 4-quadrant bipolar module that can provide zero, negative or positive voltage and can conduct current in two directions.

The second current transmission path portion 32 extends between the second and third terminals 24,34, and includes a plurality of series-connected secondary switching elements 40.

Each switching element is constituted by a semiconductor device in the form of an Insulated Gate Bipolar Transistor (IGBT). Each switching element also includes an anti-parallel diode connected in parallel therewith.

The first control circuit 20 further includes an auxiliary terminal 42 and an energy conversion block extending between the third and auxiliary terminals 34,42 such that the energy conversion block branches from the current transmission path. The energy conversion block includes a dump resistor 44 connected in series between the third and auxiliary terminals 34,42. It is envisaged that, in other embodiments of the invention, the dump resistor 44 may be replaced by a plurality of dump resistors.

In use, the auxiliary terminal 42 is connected to the second DC power transmission line 28.

The first control circuit 20 further includes a control unit 46 to control the selective removal of each first capacitor from the first current transmission path portion 30. Each first capacitor is selectively removable from the first current transmission path portion 30 as follows.

The first capacitor of each 4-quadrant bipolar module is selectively bypassed or inserted into the current transmission path by changing the states of the primary switching elements. This selectively directs current through the first capacitor or causes current to bypass the first capacitor, so that each 4-quadrant bipolar module provides a zero, negative or positive voltage.

The first capacitor of each 4-quadrant bipolar module is bypassed when the pairs of primary switching elements in each 4-quadrant bipolar module are configured to form a short circuit in the 4-quadrant bipolar module. This causes current in the first current transmission path portion 30 to pass through the short circuit and bypass the first capacitor, and so the 4-quadrant bipolar module provides a zero voltage, i.e. the 4-quadrant bipolar module is configured in a bypassed mode and thereby removed from the first current transmission path portion 30.

The first capacitor of each 4-quadrant bipolar module is inserted into the first current transmission path portion 30 when the pairs of primary switching elements in each 4-quadrant bipolar module are configured to allow the current in the first current transmission path portion 30 to flow into and out of the first capacitor. The first capacitor then charges or discharges its stored energy so as to provide a non-zero voltage, i.e. the 4-quadrant bipolar module is configured in a non-bypassed mode and thereby returned to the first current transmission path portion 30. The bidirectional nature of the 4-quadrant bipolar module means that the first capacitor may be inserted into the first current transmission path portion 30 in either forward or reverse directions so as to provide a positive or negative voltage.

It is possible to build up a combined voltage across the plurality of first modules 36, which is higher than the voltage available from each of the individual first modules 36, via the insertion of the first capacitors of multiple first modules 36, each providing its own voltage, into the first current transmission path portion 30. In this manner switching of the primary switching elements of each first module 36 causes the plurality of first modules 36 to provide a stepped variable voltage source, which permits the generation of a voltage waveform across the plurality of first modules 36 using a step-wise approximation.

It is envisaged that, in other embodiments of the invention, each first module may be configured in other ways to have bidirectional current capability. For example, each first module may include a pair of primary switching elements connected in parallel with a first capacitor in a half-bridge arrangement to define a 2-quadrant unipolar module that can provide zero or positive voltage and can conduct current in two directions.

The control unit 46 also controls the switching of the plurality of secondary switching elements 40.

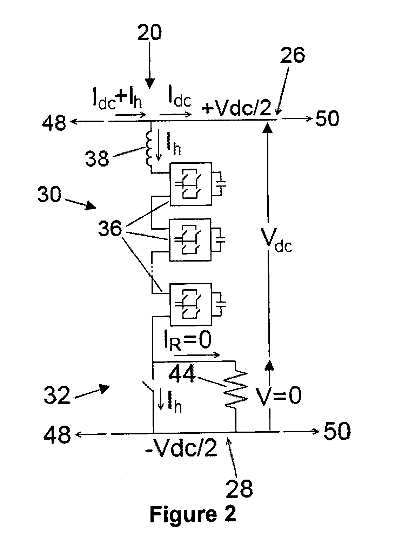

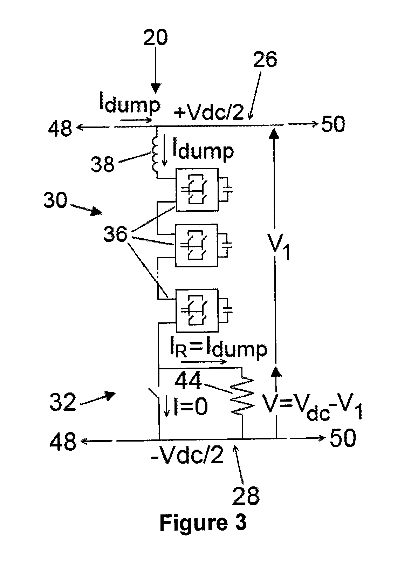

Operation of the first control circuit 20 within a DC power transmission scheme in filtering and energy removal modes is described as follows with reference to Figures 2 and 3. The first and second DC power transmission lines 26,28 interconnect first and second power converters 48,50 that are themselves connected to respective phases of corresponding first and second AC networks (not shown). Power is transmitted from the first AC network to the second AC network via the corresponding power converters and the first and second DC power transmission lines 26,28.

During normal, steady-state operation of the DC power transmission lines 26,28, a DC current I_{dc} flows through the DC power transmission lines 26,28. This DC current I_{dc} includes a harmonic current Iₕ, which was introduced by the operation of the second power converter 50. It will be appreciated that the harmonic current Iₕ may be introduced into the DC current I_{dc} in other ways.

To remove the harmonic current Iₕ from the DC current I_{dc}, the first control circuit 20 is controlled to operate in the filtering mode. In the filtering mode, the control unit 46 switches each secondary switching element 40 to an on-state to allow current to flow through the second current transmission path portion 32 and thereby bypass the dump resistor 44. In other words, the second current transmission path portion 32 is configured to "short" the dump resistor 44 out of circuit, and is maintained in that configuration, throughout the filtering mode. The purpose of configuring the second current transmission path portion 32 in this manner is to minimise power losses through energy dissipation via the dump resistor 44.

Meanwhile the control unit 46 selectively removes each first capacitor from the first current transmission path portion 30 to generate a voltage waveform across the plurality of first modules 36 and thereby modulate a voltage across the first inductor 38. The voltage waveform generated across the plurality of first modules 36 consists of a combination of a DC "blocking" voltage and a complex AC voltage. This in turn modifies the current flowing through the first inductor 38 and therefore the current transmission path. The current flowing through the current transmission path is modified to take the form of the harmonic current Iₕ flowing in the DC power transmission lines 26,28, thus effectively injecting an anti-phase version of the harmonic current Iₕ into the DC power transmission lines 26,28.

As such, the first control circuit 20 is able to cancel out the harmonic current Iₕ, thus resulting in a DC current I_{dc} that is free of the harmonic current Iₕ in the DC power transmission lines 26,28.

In the filtering mode, the first control circuit 20 draws a relatively low current (typically 0.15 per unit) from the DC power transmission lines 26,28 and does not exchange real power (other than losses) with the DC power transmission lines 26,28.

In the event that the second power converter 50 is unable to receive the transmitted power as a result of, for example, a fault in the second AC network, the first AC network must temporarily continue transmitting power into the DC transmission lines until the power transfer can be reduced to zero, which is typically 1-2 seconds for a wind generation plant. This may lead to accumulation of excess energy in the DC power transmission lines 26,28. Removal of the excess energy from the DC power transmission lines 26,28 is required in order to protect the DC power transmission lines 26,28 from an overvoltage and to ensure a low voltage fault ride-through, if necessary.

In order to allow the first AC network to continue transmitting power into the DC transmission lines via the first power converter 48, the first control circuit 20 is controlled to operate in the energy removal mode. In the energy removal mode, the control unit 46 selectively switches each secondary switching element 40 to an off-state to block current flowing through the second current transmission path portion 32 and thereby cause the current to be directed into the dump resistor 44. Meanwhile the control unit 46 selectively removes each first capacitor from the first current transmission path portion 30 to generate a voltage waveform V₁ across the plurality of first modules 36, which adds or subtracts finite voltage steps to the voltage across the DC transmission lines, V_{DC.} This causes a current I_{dump} to flow from the DC power transmission lines 26,28 through the first current transmission path portion 30 and into the dump resistor 44, and thereby permits energy dissipation via the dump resistor 44 so as to remove excess energy from the DC power transmission lines 26,28.

In the energy removal mode, the first control circuit 20 draws a higher current (typically 1.0 per unit) from the DC power transmission lines 26,28 and exchanges real power with the DC power transmission lines 26,28.

In this manner the first control circuit 20 is not only capable of actively filtering one or more harmonic currents from the DC power transmission lines 26,28 and thereby improving the quality of the power transmission line voltage during steady-state operation of the DC power transmission lines 26,28, but also can be used as an energy removal device to remove excess energy from the DC power transmission lines 26,28 during short-term fault conditions.

The inclusion of a plurality of first modules 36 in the first control circuit 20 permits generation of a wide range of voltage waveforms to not only modify the current flowing through the current transmission path so as to enable the first control circuit 20 to filter different harmonic currents from the DC power transmission lines 26,28, but also actively modify the current flowing through the dump resistor 44 so as to correspond to the excess energy to be removed from the DC power transmission lines 26,28. This dual functionality is advantageous in that the first control circuit 20 is capable of operating in both filtering and energy removal modes without requiring the use of additional hardware, thus providing savings in terms of hardware footprint and cost.

Moreover the ability to selectively remove the or each first capacitor from the current transmission path has been found to allow a fast transfer of energy, i.e. excess power, from the DC power transmission lines 26,28 to the first control circuit 20 and thereby enables rapid regulation of the energy levels in the DC power transmission lines 26,28. This in turn permits the first control circuit 20 to respond quickly to a requirement to regulate energy levels in the DC power transmission lines 26,28 in the event of a fault in an associated electrical network.

Furthermore the connection of the auxiliary terminal 42 to the second DC power transmission line 28 in turn allows the dump resistor 44 to be connected to the second DC power transmission line 28, rather than ground, and thereby allows high currents to circulate through the DC power transmission lines 26,28 instead of the stray capacitance of the DC power transmission lines 26,28.

It will be appreciated that the second current transmission path portion 32 conducts a current that is proportionally smaller than the current flowing in the DC power transmission lines 26,28 in the filtering mode, and a zero or near-zero current in the energy removal mode. This thereby allows the use of low current, high voltage semiconductor devices in the second current transmission path portion 32, thus providing reductions in terms of losses, cost and footprint.

A simulation model of the first control circuit 20 has been implemented using Matlab-Simulink to illustrate its operation in the filtering and energy removal modes.

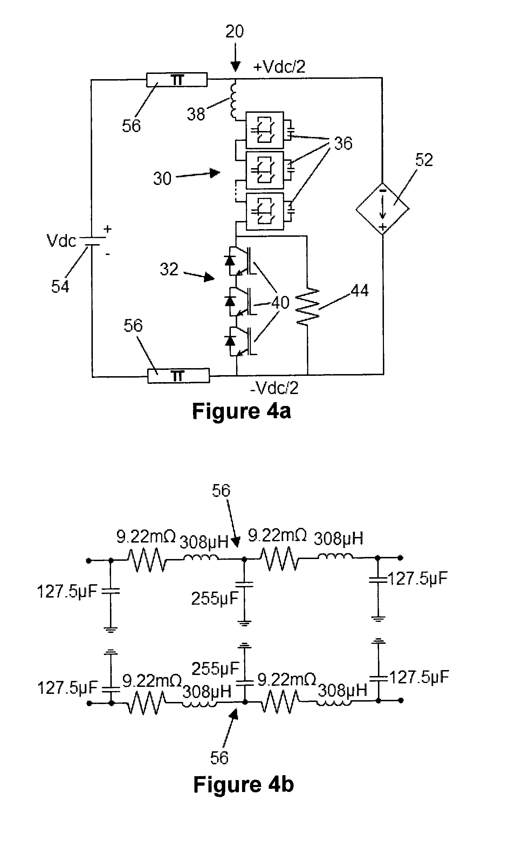

A representation of the simulation model is shown in Figure 4a. The simulation model further includes a receiving station 52, a transmitting station 54 and first and second DC power transmission lines 26,28. The receiving station 52 is modelled as a current source that absorbs a current of 1000 A plus a 6^{th} harmonic ripple. The transmitting station 54 and the first and second DC power transmission lines 26,28 are respectively modelled as a voltage source and a pair of π-sections 56. Figure 4b shows, in schematic form, a representation of each π-section 56 as shown in Figure 4a.

The simulation model is simulated for a period of 1 second. During the simulated period, the first control circuit 20 operates in the filtering mode for the first 200 ms to filter the 6^{th} harmonic ripple created by the current source. At t = 200 ms, the current demand for the current source is set to zero and a demand for power to be dissipated in the dump resistor 44 is sent to the control unit 46 to dissipate 10 MW of power for 600 ms. In other words, the first control circuit 20 operates in the energy removal mode between t = 200 ms and t = 800 ms. A slew rate of +/- 200kW/ms is applied to the demand for power to be dissipated in the dump resistor 44. The first control circuit 20 in the filtering and energy removal modes is controlled to maintain an average voltage of 1500 V for each first capacitor. At t = 800 ms, the demand for power to be dissipated in the dump resistor 44 drops to zero again and the first control circuit 20 resumes operation in the filtering mode.

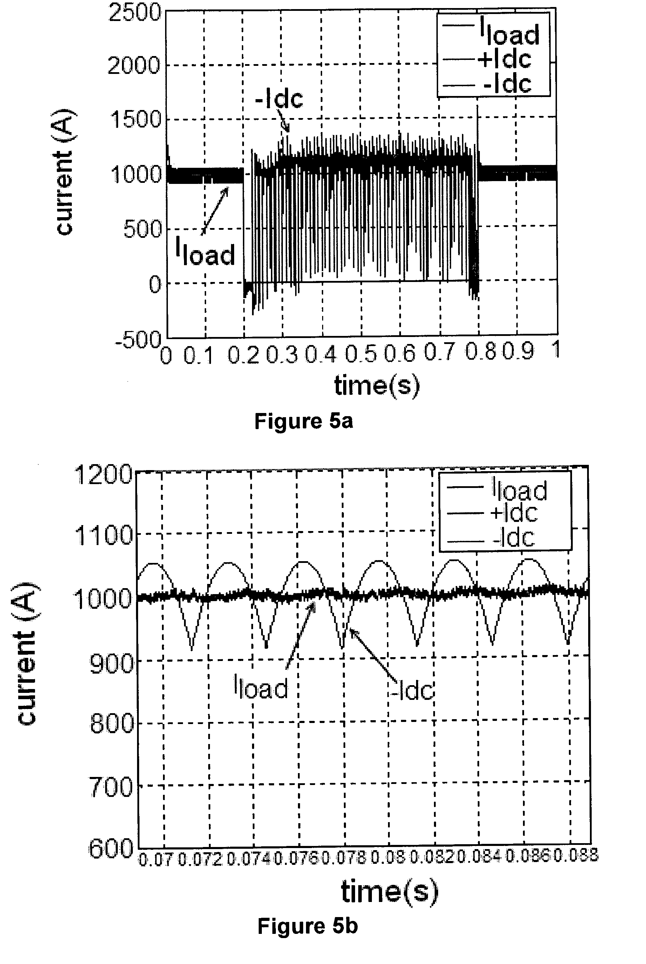

Figure 5a illustrates, in graph form, the changes in the current I_{load} absorbed by the receiving station 52 and the current I_{dc} in the DC power transmission lines 26,28 during the operation of the first control circuit 20 in the filtering and energy removal modes.

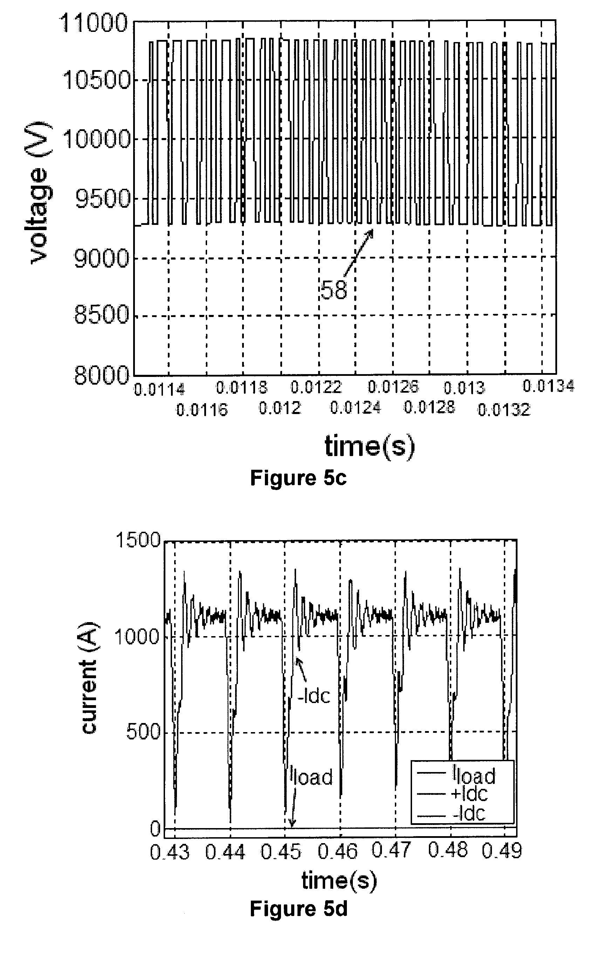

Figure 5b illustrates, in graph form, a close-up of the changes in the current I_{load} absorbed by the receiving station 52 and the current I_{dc} in the DC power transmission lines 26,28 during the operation of the first control circuit 20 in the filtering mode. Figure 5c illustrates, in graph form, a close-up of the change in voltage 58 across the plurality of first modules 36 during the operation of the first control circuit 20 in the filtering mode.

It can be seen from Figures 5a and 5b that, in the filtering mode, the current I_{dc} in the DC power transmission lines 26,28 is free of the 6^{th} harmonic ripple that is present in the current absorbed by the receiving station 52. It is therefore shown that the first control circuit 20 is capable of filtering the 6^{th} harmonic ripple from the DC power transmission lines 26,28.

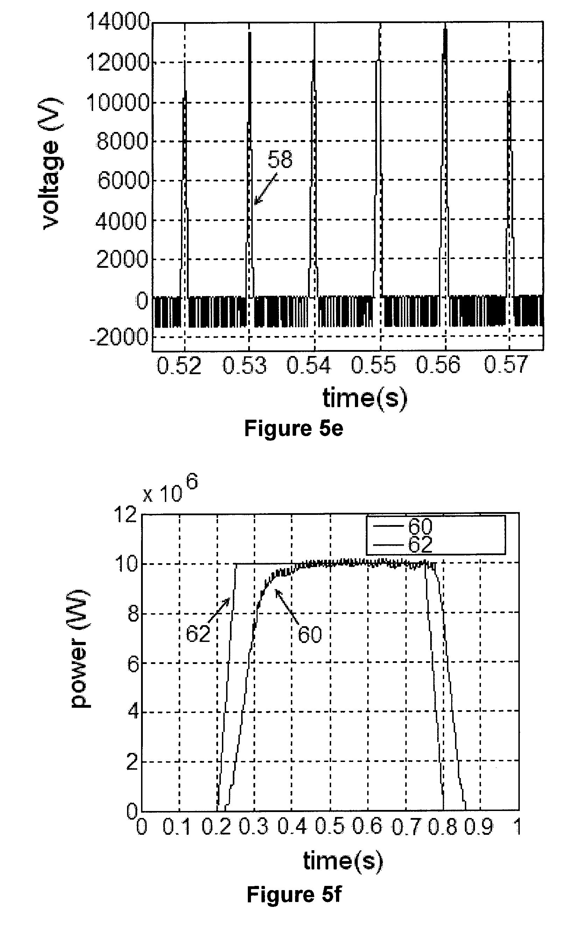

Figure 5d illustrates, in graph form, a close-up of the changes in the current I_{load} absorbed by the receiving station 52 and the current I_{dc} in the DC power transmission lines 26,28 during the operation of the first control circuit 20 in the energy removal mode. Figure 5e illustrates, in graph form, a close-up of the change in voltage 58 across the plurality of first modules 36 during the operation of the first control circuit 20 in the energy removal mode.

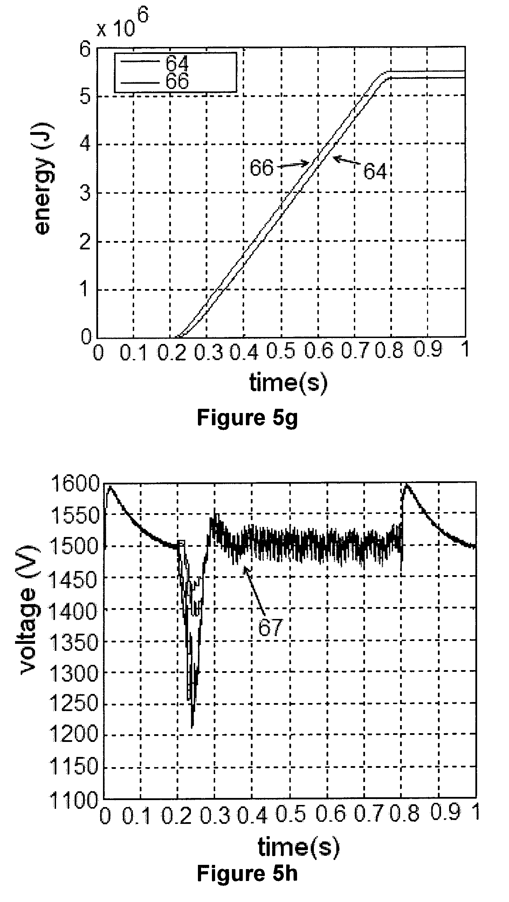

Figures 5f compares, in graph form, the dissipated power 60 and a demand 62 for power to be dissipated via the dump resistor 44 during the operation of the first control circuit 20 in the filtering and energy removal modes. Figure 5g compares, in graph form, the dissipated energy 64 and a demand 66 for energy to be dissipated via the dump resistor 44 during the operation of the first control circuit 20 in the filtering and energy removal modes.

It can be seen from Figures 5d to 5g that, in the energy removal mode, the first control circuit 20 is capable of removing excess energy from the DC power transmission lines 26,28 by selectively directing current through the dump resistor 44 in the energy removal mode. It can also be seen from Figures 5f and 5g that the dissipation of energy via the dump resistor 44 is minimised during the operation of the first control circuit 20 in the filtering mode.

Figure 5h illustrates, in graph form, the change in voltage 67 of the first capacitors during the operation of the first control circuit 20 in the filtering and energy removal modes. It can be seen from Figure 5h that the first control circuit 20 is capable of balancing the voltages 67 of the first capacitors to maintain an average first capacitor voltage of 1500 V in the filtering and energy removal modes.

The simulation model shown in Figure 4a therefore shows that the first control circuit 20 is not only capable of stable operation in the filtering and energy removal modes, but is capable of transitioning seamlessly between the two modes without adversely affecting the operation of the first control circuit 20 in either mode.

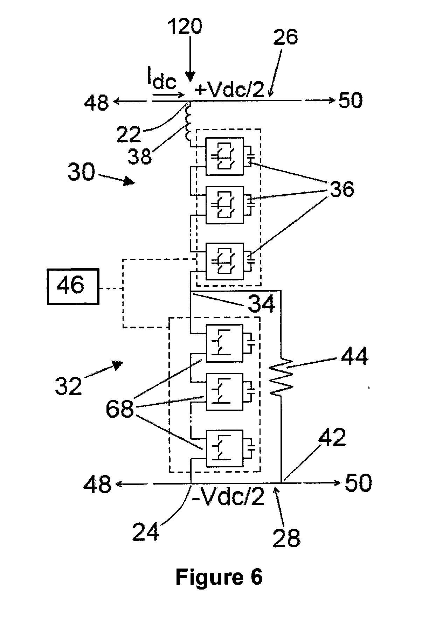

A second control circuit 120 according to a second embodiment of the invention is shown in Figure 6. The second control circuit 120 shown in Figure 6 is similar in structure and operation to the first control circuit 20 shown in Figure 1, and like features share the same reference numerals.

The second control circuit 120 differs from the first control circuit 20 in that, in the second control circuit 120, the plurality of series-connected secondary switching elements 40 is replaced by a plurality of series-connected second modules 68. Each second module 68 includes a pair of primary switching elements connected in parallel with an energy storage device in the form of a second capacitor. The pair of primary switching elements and the second capacitor are connected in a half-bridge arrangement to define a 2-quadrant unipolar module that can provide zero or positive voltage and can conduct current in two directions.

In use, the control unit controls the selective removal of each second capacitor from the second current transmission path portion 32. Each second capacitor is selectively removable from the second current transmission path portion 32 as follows.

The second capacitor of each 2-quadrant unipolar module is selectively bypassed or inserted into the current transmission path by changing the states of the primary switching elements. This selectively directs current through the second capacitor or causes current to bypass the second capacitor, so that each 2-quadrant unipolar module provides a zero or positive voltage.

The second capacitor of each 2-quadrant unipolar module is bypassed when the pair of primary switching elements in each 2-quadrant unipolar module is configured to form a short circuit in the 2-quadrant unipolar module. This causes current in the second current transmission path portion 32 to pass through the short circuit and bypass the second capacitor, and so the 2-quadrant unipolar module provides a zero voltage, i.e. the 2-quadrant unipolar module is configured in a bypassed mode and thereby removed from the second current transmission path portion 32.

The second capacitor of each 2-quadrant unipolar module is inserted into the second current transmission path portion 32 when the pair of primary switching elements in each 2-quadrant unipolar module is configured to allow the current in the second current transmission path portion 32 to flow into and out of the second capacitor. The second capacitor then charges or discharges its stored energy so as to provide a non-zero voltage, i.e. the 2-quadrant unipolar module is configured in a non-bypassed mode and thereby returned to the second current transmission path portion 32.

It is possible to build up a combined voltage across the plurality of second modules 68 in the same manner as described above with respect to the plurality of first modules 36. The operation of the second control circuit 120 in the filtering and energy removal modes is similar to the operation of the first control circuit 20 in the same modes, except that:
- in the filtering mode, the control unit switches the states of the primary switching elements of each second module 68 to allow current to flow through the second current transmission path portion 32 and bypass the dump resistor 44;
- in the energy removal mode, the control unit selectively switches the states of the primary switching elements of each second module 68 of the second current transmission path portion 32 in the energy removal mode to block or minimise current flowing through the second current transmission path portion 32 and thereby cause the current to be directed into the dump resistor 44.

Preferably the second control circuit 120 in the energy removal mode should be controlled so that the current flowing through the second current transmission path portion 32 is zero. However, in practice, some current will flow through the second current transmission path portion 32 in the energy removal mode to enable charging and discharging of the second capacitors to achieve a desired voltage across the dump resistor 44.

It will be appreciated that each of the plurality of second modules 68 can be configured to have a lower rating than each of the plurality of first modules 36 so as to provide reductions in terms of losses, cost and footprint. This is because, as also set out above with respect to the first control circuit 20, the second current transmission path portion 32 conducts a current that is proportionally smaller than the current flowing in the DC power transmission lines 26,28 in the filtering mode, and a zero or near-zero current in the energy removal mode.

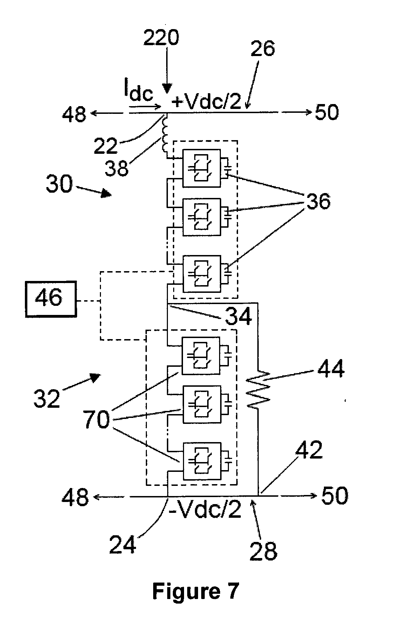

A third control circuit 220 according to a third embodiment of the invention is shown in Figure 7. The third control circuit 220 shown in Figure 7 is similar in structure and operation to the second control circuit 120 shown in Figure 6, and like features share the same reference numerals.

The third control circuit 220 differs from the second control circuit 120 in that, in the third control circuit 220, each second module 70 includes two pairs of primary switching elements connected in parallel with an energy storage device in the form of a second capacitor. The pairs of primary switching elements and the second capacitor are connected in a full-bridge arrangement to define a 4-quadrant bipolar module that can provide zero, negative or positive voltage and can conduct current in two directions.

In use, the control unit controls the selective removal of each second capacitor from the second current transmission path portion 32. Each second capacitor is selectively removable from the second current transmission path portion 32 in the same manner as the selective removal of each first module 36 from the first current transmission path portion 30 in the first control circuit 20.

Other than the use of 4-quadrant bipolar modules in place of 2-quadrant unipolar modules in the second current transmission path portion 32, the operation of the third control circuit 220 in the filtering and energy removal modes is similar to the operation of the second control circuit 120 in the same modes.

The use of the 4-quadrant bipolar modules in the second current transmission path portion 32 is beneficial in that it permits use of the third control circuit 220 in combination with a LCC HVDC scheme in which the polarity of the DC voltage changes when the direction of the transmitted power is inverted.

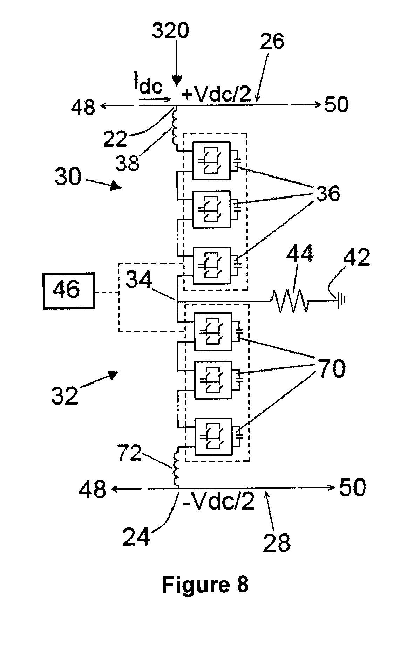

A fourth control circuit 320 according to a fourth embodiment of the invention is shown in Figure 8. The fourth control circuit 320 shown in Figure 8 is similar in structure and operation to the third control circuit 220 shown in Figure 7, and like features share the same reference numerals.

The fourth control circuit 320 differs from the third control circuit 220 in that:
- in use, the auxiliary terminal 42 is connected to ground, instead of the second DC power transmission line 28;
- the second current transmission path portion 32 further includes a second inductor 72 connected in series with the plurality of second modules 70.

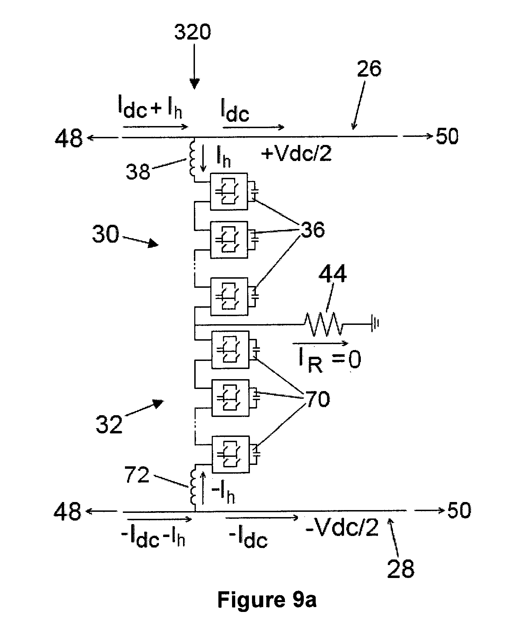

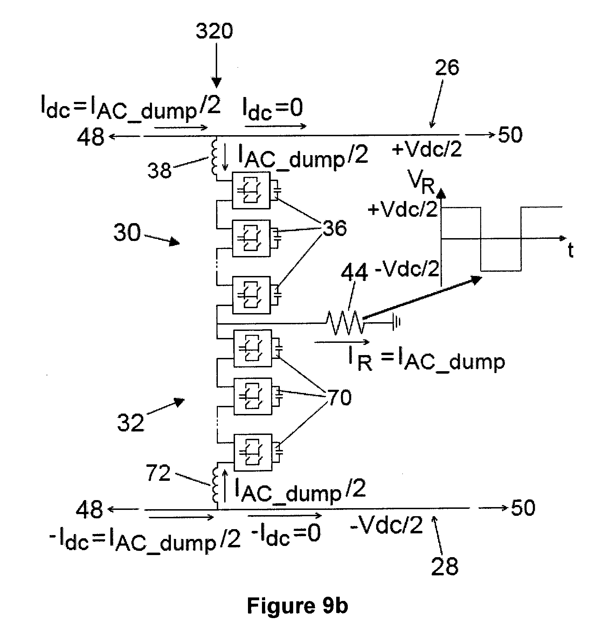

Operation of the fourth control circuit 320 within a DC power transmission scheme in the filtering and energy removal modes is described as follows with reference to Figures 9a and 9b.

The first and second DC power transmission lines 26,28 interconnect first and second power converters 48,50 that are themselves connected to respective phases of corresponding first and second AC networks (not shown). Power is transmitted from the first AC network to the second AC network via the corresponding power converters and the first and second DC power transmission lines 26,28.

During normal operation of the DC power transmission lines 26,28, a DC current I_{dc} flows through the DC power transmission lines 26,28. This DC current I_{dc} includes a harmonic current Iₕ, which was introduced by the operation of the second power converter 50.

To remove the harmonic current Iₕ from the DC current I_{dc}, the fourth control circuit 320 is controlled to operate in the filtering mode. In the filtering mode, the control unit 46 selectively removes each first capacitor from the first current transmission path portion 30 to generate a voltage waveform across the plurality of first modules 36 and thereby modulate a voltage across the first inductor 38. Similarly, in the filtering mode, the control unit 46 selectively removes each second capacitor from the second current transmission path portion 32 to generate a voltage waveform across the plurality of second modules 70 and thereby modulate a voltage across the second inductor 72.

The voltage waveforms across the plurality of first modules 36 and the plurality of second modules 70 are shaped to maintain a zero or near-zero voltage across the dump resistor 44 in order to block or minimise current flowing through the dump resistor 44 in the filtering mode and thereby minimise dissipation of energy via the dump resistor 44.

The fourth control circuit 320 is controlled so that the modulation of the voltages across the first and second inductors 38,72 modifies the currents flowing through the first and second inductors 38,72 and therefore the current transmission path. The current flowing through the current transmission path is modified to take the form of the harmonic current Iₕ flowing in the DC power transmission lines 26,28, thus effectively injecting an anti-phase version of the harmonic current Iₕ into the DC power transmission lines 26,28.

As such, the fourth control circuit 320 is able to cancel out the harmonic current Iₕ, thus resulting in a DC current I_{dc} that is free of the harmonic current Iₕ in the DC power transmission lines 26,28.

In the event that the second power converter 50 is unable to receive the transmitted power as a result of, for example, a fault in the second AC network, the first AC network must temporarily continue transmitting power into the DC transmission lines until the power transfer can be reduced to zero, which is typically 1-2 seconds for a wind generation plant. As indicated above, this may lead to accumulation of excess energy in the DC power transmission lines 26,28. Removal of the excess energy from the DC power transmission lines 26,28 is required in order to protect the DC power transmission lines 26,28 from an overvoltage and to ensure a low voltage fault ride-through, if necessary.

In order to allow the first AC network to continue transmitting power into the DC transmission lines via the first power converter 48, the fourth control circuit 320 is operated in the energy removal mode. In the energy removal mode, the control unit 46 selectively removes each of the first and second capacitors from the first and second current transmission path portions 30,32 to generate a voltage waveform across each of the plurality of first modules 36 and the plurality of second modules 70, which adds or subtracts finite voltage steps to the voltage across the DC transmission lines, V_{DC}. The voltage waveforms across each of the plurality of first modules 36 and the plurality of second modules 70 are shaped to generate an AC voltage waveform across the dump resistor 44. This causes current I_{AC_dump}/2 to flow from the DC power transmission lines 26,28 through each of the first and second current transmission path portions 30,32 and therefore a current I_{AC_dump} to flow into the dump resistor 44, thereby permitting energy dissipation via the dump resistor 44 so as to remove excess energy from the DC power transmission lines 26,28.

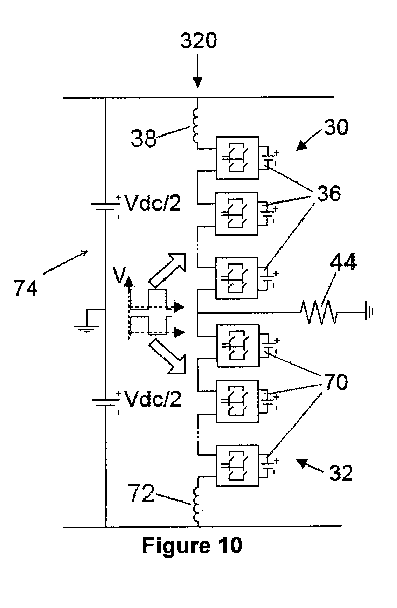

A simulation model of the fourth control circuit 320 has been implemented using Matlab-Simulink to illustrate its operation in the energy removal mode. A representation of the simulation model is shown in Figure 10 in which each of the first and second capacitors are modelled as a DC voltage source and the fourth control circuit 320 is connected in parallel with a DC voltage source 74.

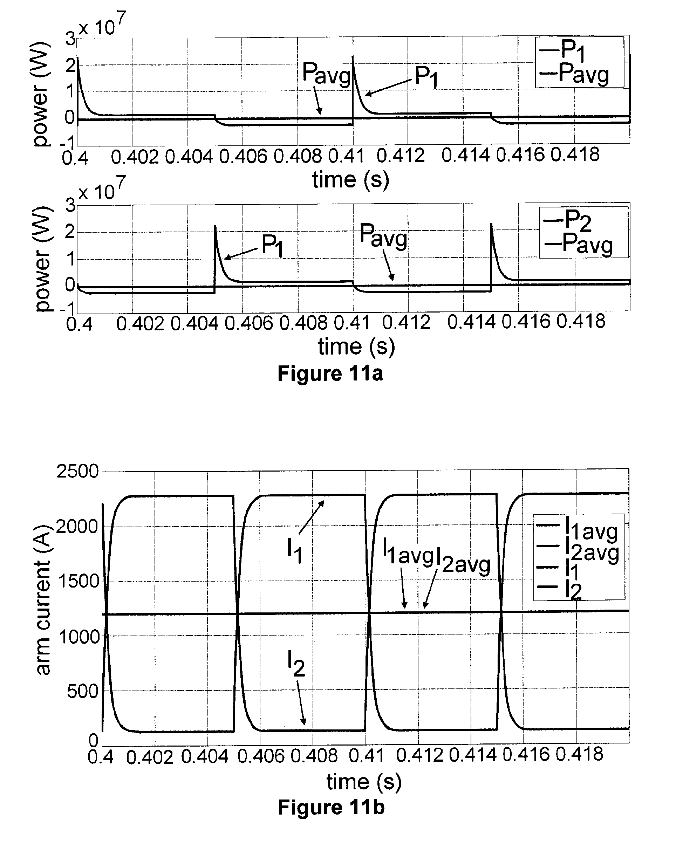

A square voltage waveform demand is set for each of each of the plurality of first modules 36 and the plurality of second modules 70. The positive peak of each square voltage waveform demand is set to Vdc, while the negative peak of each square voltage waveform demand is a negative voltage value controlled by a proportional-integral regulator so as to restore any lost energy in the first and second capacitors, with a view to achieving a zero net energy exchange over a single cycle, as shown in Figure 11a which illustrates, in graph form, the change in power P₁ across the plurality of first modules 36 and a zero net power exchange indicated by a nil average power P_{avg}.

In practice, the negative value of the generated voltage waveform causes a constant DC current to flow through the current transmission path from the second DC power transmission line 28 to the first DC power transmission line 26 to compensate for any loss of energy from the first and second capacitors to the dump resistor 44. The constant DC current offsets the AC current flowing through the current transmission path to the dump resistor 44 as shown in Figure 11b which illustrates, in graph form, the instantaneous current I₁ and a zero average current I_{1avg} in the first current transmission path portion 30 and the instantaneous current I₂ and a zero average current I_{2avg} in the second current transmission path portion 32.

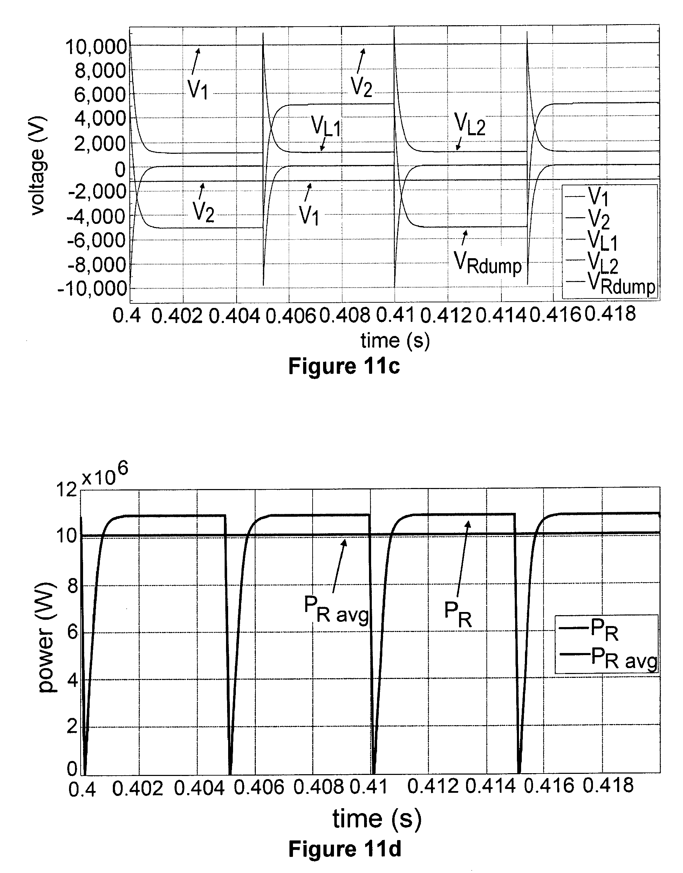

Figure 11c illustrates, in graph form, the change in voltages V₁,V₂,V_{L1},V_{L2},V_{Rdump} across the plurality of first modules 36, the plurality of second modules 70, the first and second inductors 38,72 and the dump resistor 44 during the operation of the fourth control circuit 320 in the energy removal mode. Figure 11d shows, in graph form, the instantaneous power P_{R} and average power P_{Ravg} dissipated in the dump resistor 44.

It was found from the simulation model that the use of a 180° phase shifted square voltage waveform across each of the plurality of first modules 36 and the plurality of second modules 70 in the energy removal mode not only reduces the peak values of the currents through the first and second capacitors but also results in a zero net energy exchange for each of the plurality of first modules 36 and the plurality of second modules 70 in a single cycle. The use of a 180° phase shifted square voltage waveform across each of the plurality of first modules 36 and the plurality of second modules 70 in the energy removal mode therefore results in stable operation of the fourth control circuit 320.

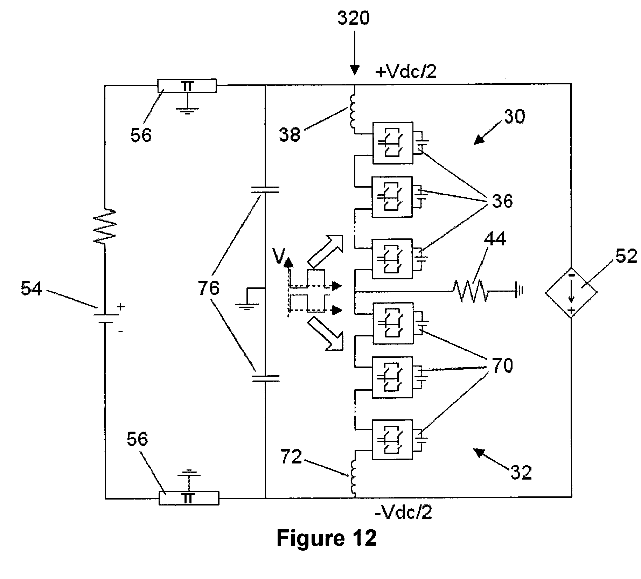

Another simulation model of the fourth control circuit 320 has been implemented using Matlab-Simulink to illustrate its operation in the filtering and energy removal modes. A representation of the simulation model is shown in Figure 12.

The simulation model shown in Figure 12 is similar to the simulation model shown in Figure 10, except that:
- each of the first and second capacitors is modelled as a 7 mF capacitor;
- a pair of HVDC cables is modelled as a pair of π-sections 56 between the DC voltage source and the fourth control circuit 320. Figure 4b shows, in schematic form, a representation of each π-section 56 as shown in Figure 12.

The simulation model includes a receiving station 52, a transmitting station 54 and first and second DC power transmission lines 26,28. The receiving station 52 is modelled as a current source that absorbs a current of 1000 A plus a 6^{th} harmonic ripple. The transmitting station 54 is modelled as a voltage source. The simulation model further includes a pair of 1 mF DC link capacitors 76 connected in parallel with the fourth control circuit 320, a junction between the DC link capacitors 76 being connected to ground. Each of the first and second inductors 38,72 is a 1 mH inductor, and the dump resistor 44 is a 1.8Ω resistor.

The simulation model is simulated for a period of 1 second. During the simulated period, the fourth control circuit 320 operates in the energy removal mode for the first 600 ms and in the filtering mode for the next 400 ms. A square voltage waveform of 320Hz is generated across each of the plurality of first modules 36 and the plurality of second modules 70 in the energy removal mode.

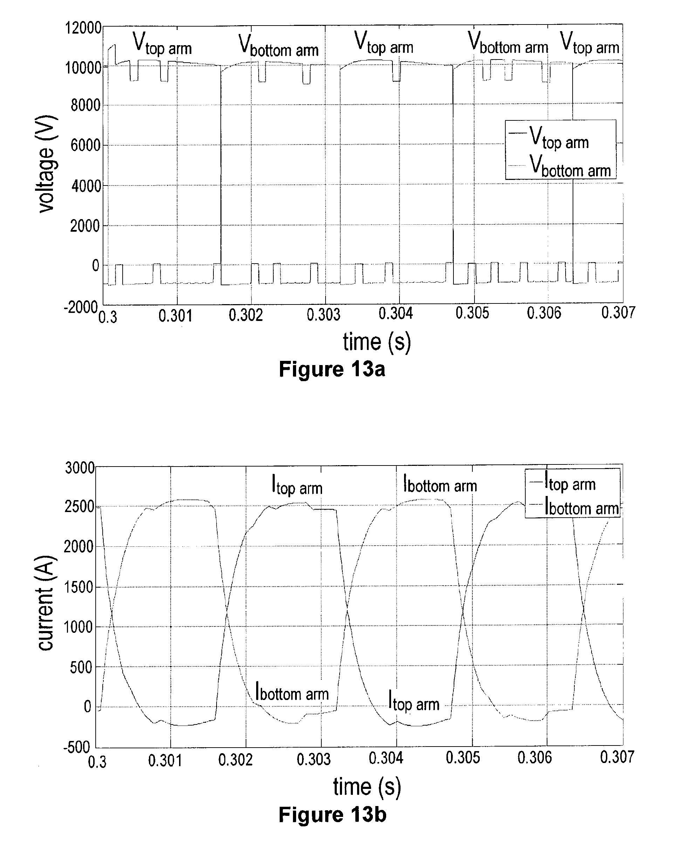

Figure 13a illustrate, in graph form, the square voltage waveforms V_{top_arm,}V_{bottom_arm} respectively generated across the first plurality of modules 36 and the plurality of second modules 70 during the operation of the fourth control circuit 320 in the energy removal mode.

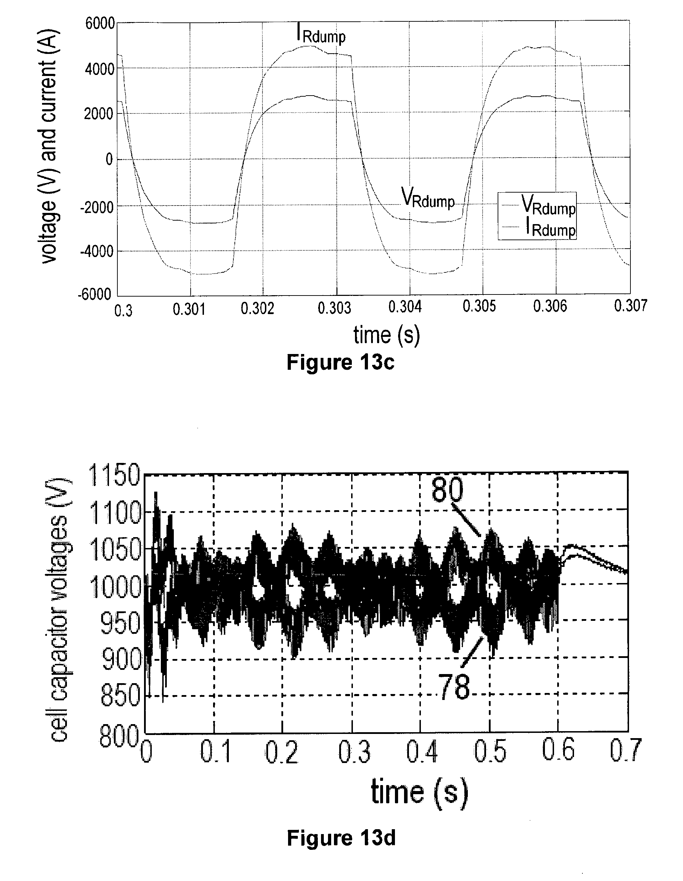

Figure 13b illustrate, in graph form, the change in currents I_{top_arm},I_{bottom_arm} in the first and second current transmission path portions 30,32 respectively during the operation of the fourth control circuit 320 in the energy removal mode. It can be seen from Figure 13b that the current in each of the first and second current transmission path portions 30,32 contains a DC current component which flows from the first DC power transmission line 26 to the second DC power transmission line 28 in order to transfer energy from the DC power transmission lines 26,28 into the first and second capacitors into the cell capacitors. This energy is then transferred from the first and second capacitors to the dump resistor 44 for energy dissipation, as shown in Figure 13c which illustrates, in graph form, the AC voltage V_{Rdump} and current I_{Rdump} generated across the dump resistor 44.

Figure 13d illustrate, in graph form, the change in voltage 78,80 of each of the first and second capacitors during the operation of the fourth control circuit 320 in the energy removal mode. It can be seen from Figure 13d that the fourth control circuit 320 is capable of balancing the voltages 78,80 of the first and second capacitors to maintain an average capacitor voltage of approximately 1000 V and to minimise the difference in capacitor voltage between the first and second capacitors in the energy removal mode.

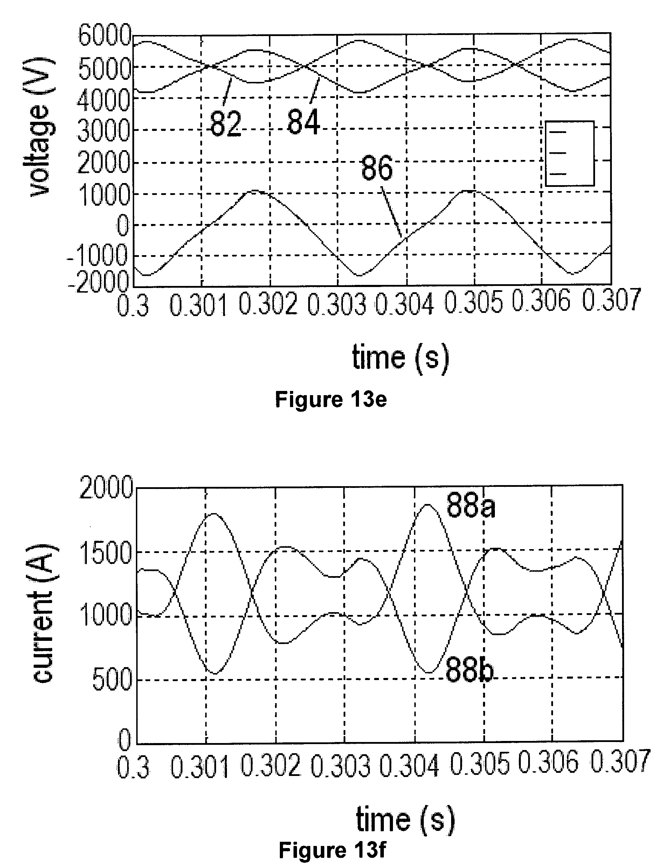

Figure 13e compares, in graph form, the change in voltages 82,84,86 across the DC link capacitors and ground potential respectively during the operation of the fourth control circuit 320 in the energy removal mode. It can be seen from Figure 13e that the circulation of current results in periodic and alternate charging and discharging of the two DC link capacitors. This generates a fluctuation in the voltage of the grounded junction between the two DC link capacitors.

Figure 13f illustrates the change in currents 88a,88b in the DC power transmission lines 26,28 during the operation of the fourth control circuit 320 in the energy removal mode. It can be seen that a fraction of the current flowing in the first and second current transmission path portions 30,32 flows through the DC power transmission lines 26,28. is flowing through the HVDC cable. This is due to the parallel connection of the DC link capacitors and the fourth control circuit 320.

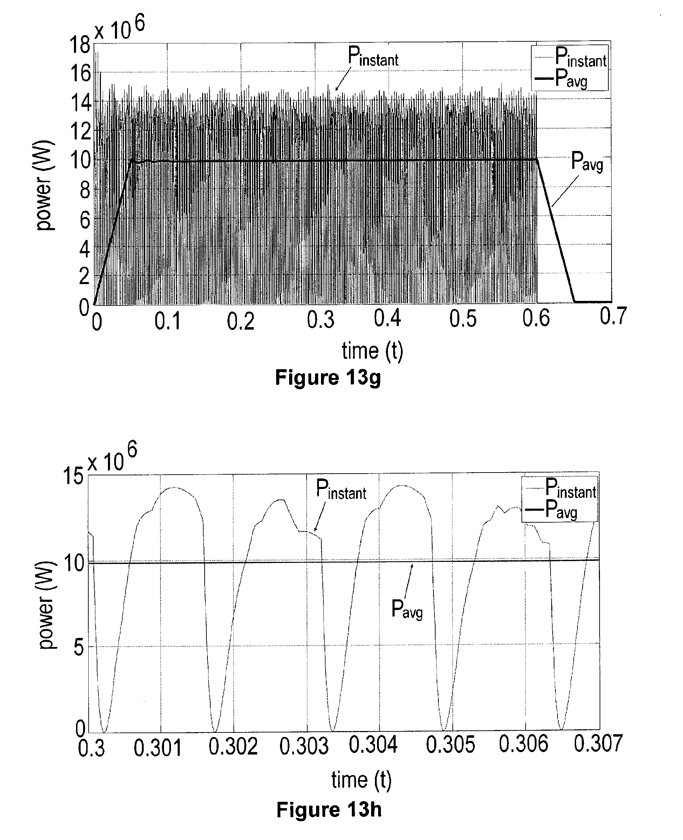

Figure 13g and 13h illustrates, in graph form, the instantaneous power Pᵢₙₛₜₐₙₜ and average power P_{avg} dissipated in the dump resistor 44 during the operation of the fourth control circuit 320 in the energy removal mode. It will be appreciated that the rising and falling times in Figures 13g and 13h are due to the Simulink simulation which averages a large array of samples.

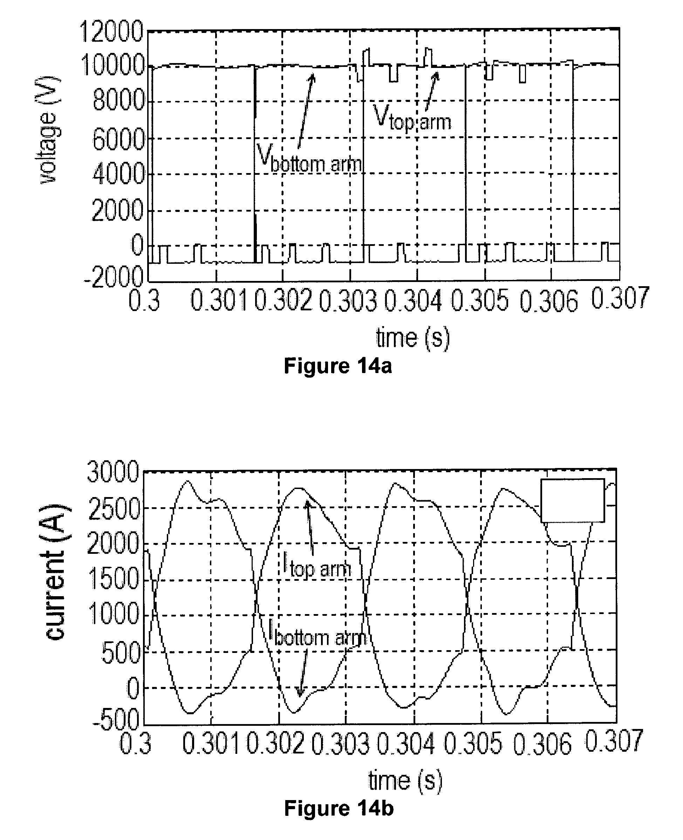

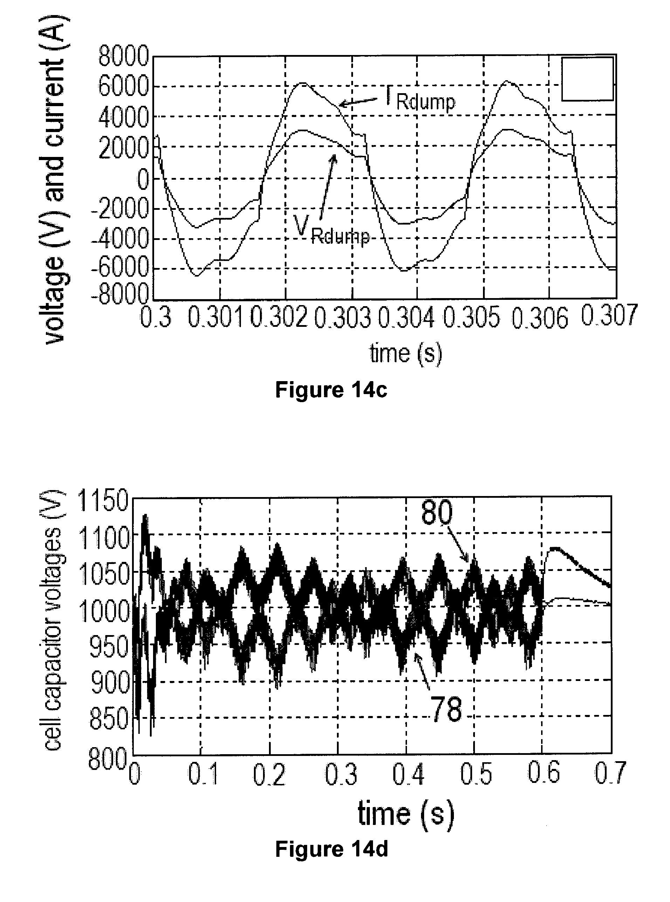

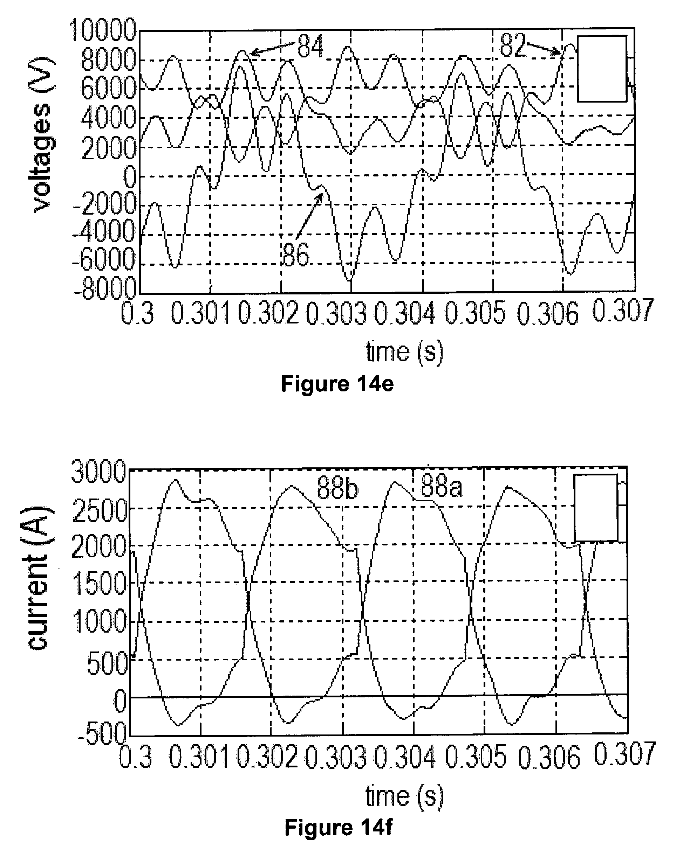

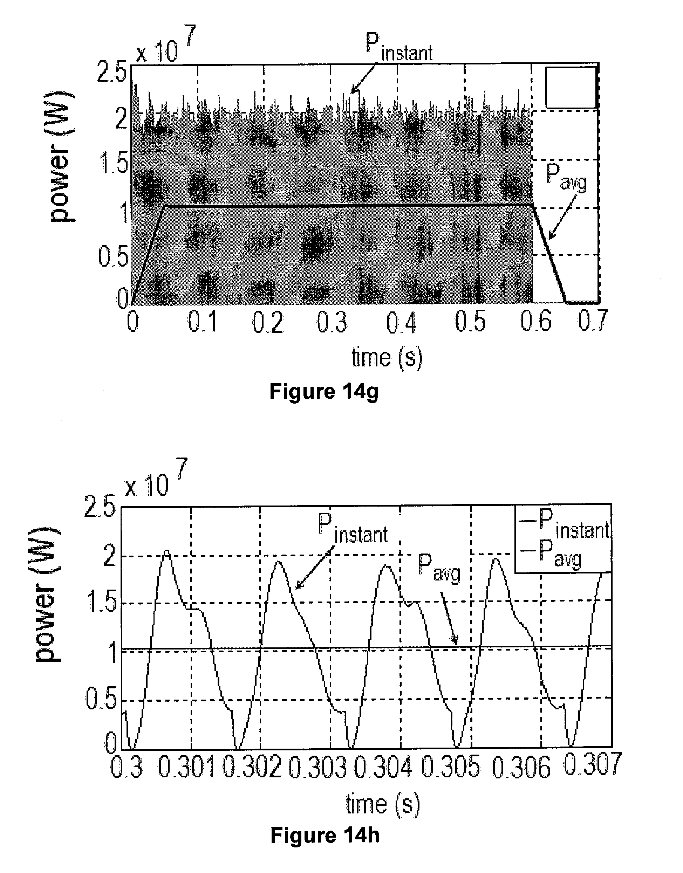

Figures 14a to 14h respectively illustrate, in graph form, simulation results that are similar to the simulation results shown in Figures 13a and 13h, except that the simulation results in Figures 14a to 14h are for a simulation model in which the DC link capacitors are omitted and all of the current flows through the stray capacitance of the DC power transmission cables to ground. It can be seen from Figures 14a to 14h that the simulation model without the DC link capacitors is capable of dissipating the required level of power, but the fluctuation in the voltages of the DC power transmission lines 26,28 increases, which in turn increases the fluctuation of the ground potential.

It is further seen from Figures 13a to 13h and 14a to 14h that the fourth control circuit 320 is capable of dissipating full power instantaneously. This is beneficial in that the fourth control circuit 320 is capable of responding quickly to a requirement to regulate energy levels in the DC power transmission lines 26,28.

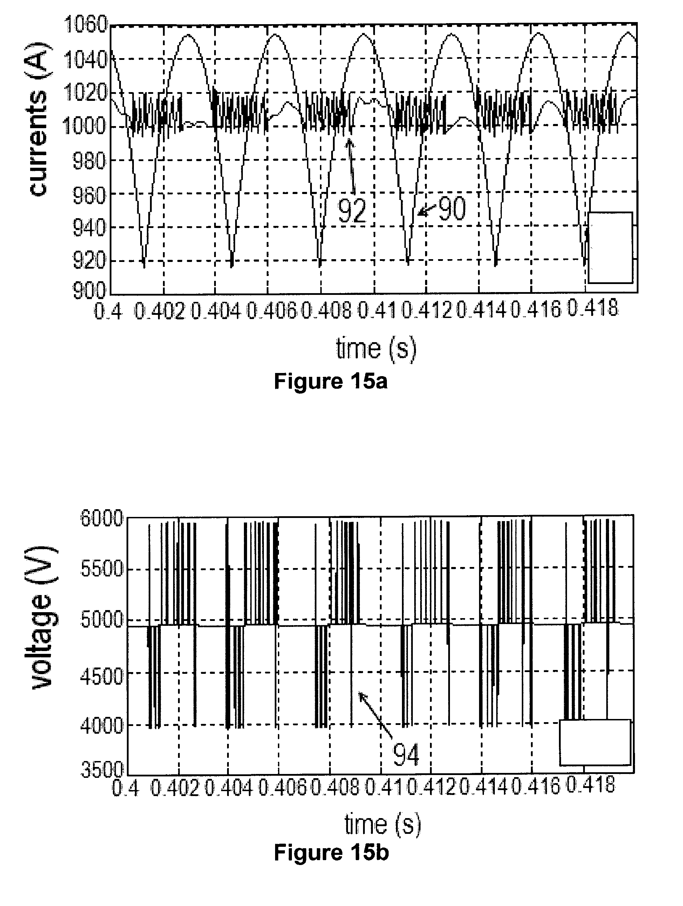

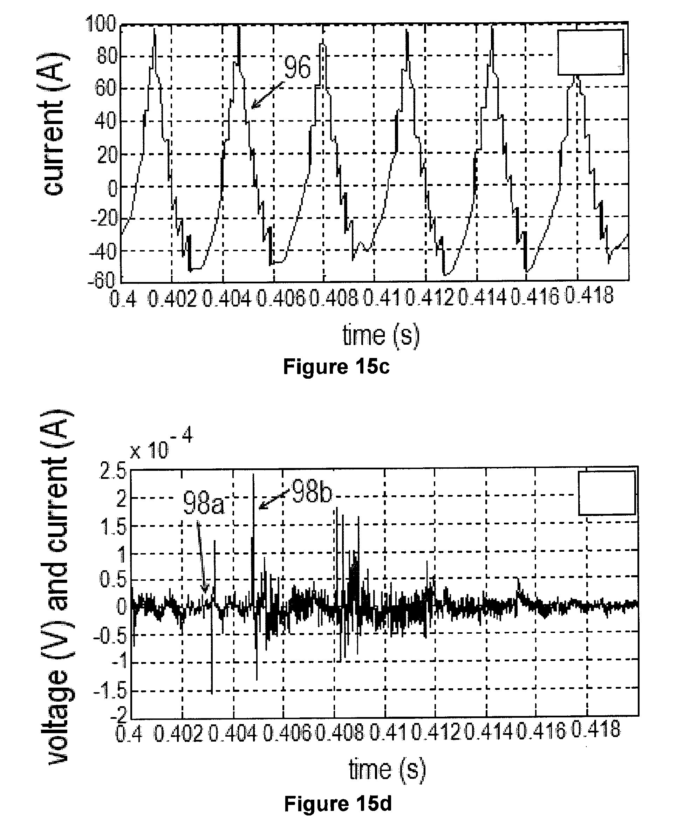

Figure 15a illustrates, in graph form, a close-up of the changes in the current 90 absorbed by the receiving station 52 and the current 92 in the DC power transmission lines 26,28 during the operation of the fourth control circuit 320 in the filtering mode. Figure 15b and 15c illustrates, in graph form, a close-up of the changes in voltages 94 and currents 96 of the plurality of first modules 36 and the plurality of second modules 70 during the operation of the fourth control circuit 320 in the filtering mode.

It can be seen from Figure 15a that, in the filtering mode, the current in the DC power transmission lines 26,28 is free of the harmonic ripple that is present in the current absorbed by the receiving station 52. It is therefore shown that the fourth control circuit 320 is capable of filtering the 6^{th} harmonic ripple from the DC power transmission lines 26,28.

Figures 15d illustrates, in graph form, the changes in voltage and current 98a,98b of the dump resistor 44 during the operation of the fourth control circuit 320 in the filtering mode. It can be seen from Figure 15d that the dissipation of energy via the dump resistor 44 is minimised during the operation of the fourth control circuit 320 in the filtering mode.

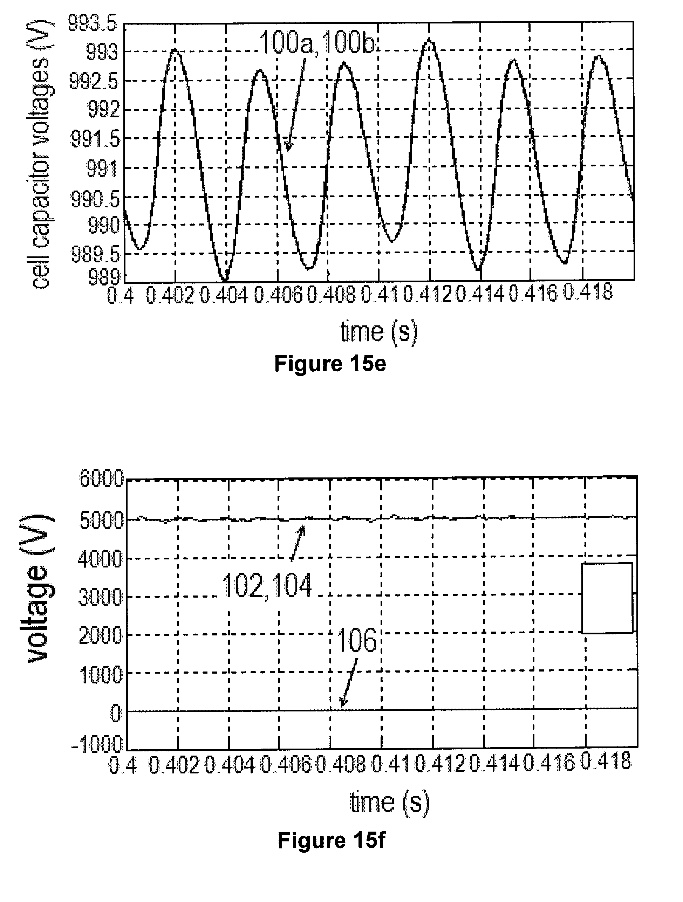

Figure 15e illustrates, in graph form, the change in voltages 100a,100b of each of the first and second capacitors during the operation of the fourth control circuit 320 in the filtering mode. It can be seen from Figure 15e that the fourth control circuit 320 is capable of balancing the voltages 100a,100b of the first and second capacitors to maintain an average capacitor voltage of approximately 1000 V in the filtering mode.

Figure 15f illustrates, in graph form, the change in voltages 102,104,106 in the DC power transmission lines 26,28 and ground potential respectively during the operation of the fourth control circuit 320 in the filtering mode. It can be seen from Figure 15f that there is minimal fluctuation in the voltages 102,104,106 in the DC power transmission lines 26,28 and ground potential during the operation of the fourth control circuit 320 in the filtering mode

The simulation model shown in Figure 12 therefore shows that the first control circuit 20 is not only capable of stable operation in the filtering and energy removal modes, but is capable of transitioning seamlessly between the two modes without adversely affecting the operation of the first control circuit 20 in either mode.

It will be appreciated that the simulation models described in this patent specification represent scaled-down models of the control circuit according to the invention in order to facilitate their simulation.

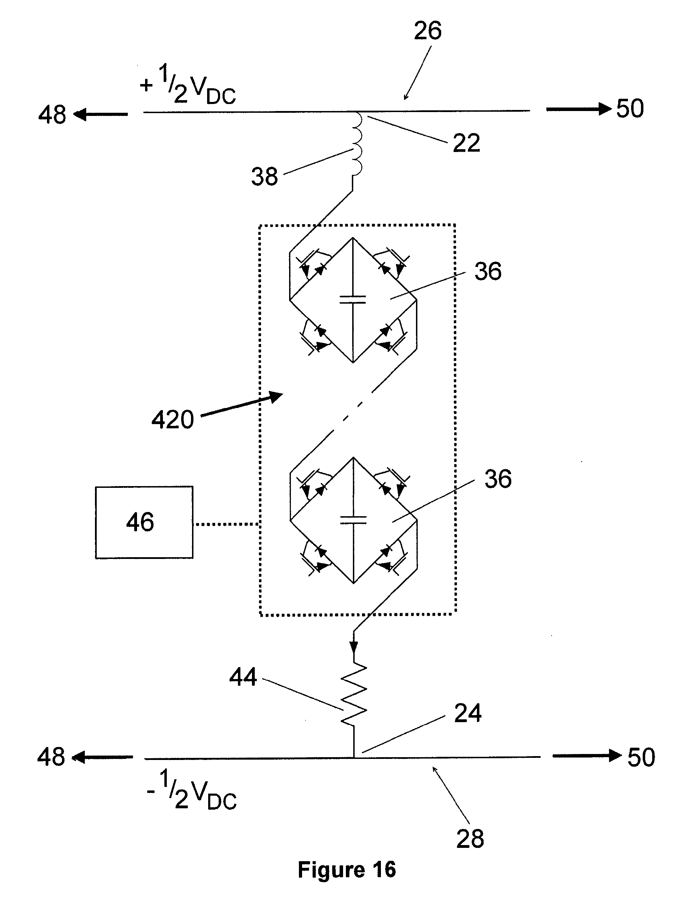

A fifth control circuit 420 according to a fifth embodiment of the invention is shown in Figure 16. The fifth control circuit 420 shown in Figure 16 is similar in structure and operation to the first control circuit 20 shown in Figure 1, and like features share the same reference numerals.

The fifth control circuit 420 differs from the fourth control circuit 320 in that the fifth control circuit 420 omits the third terminal 34, the auxiliary terminal 42 and the plurality of second modules 70. As such, the current transmission path of the fifth control circuit 420 consists of a plurality of first modules 36 connected in series with the first inductor 38 and the dump resistor 44 between the first and second terminals 22,24.

Operation of the fifth control circuit 420 in the filtering and energy removal modes is described as follows.

In the filtering mode, the control unit 46 selectively removes each first capacitor from the current transmission path to generate a voltage waveform across the plurality of first modules 36 and thereby modulate a voltage across each of the first inductor 38 and the dump resistor 44. The voltage waveform generated across the plurality of first modules 36 consists of a combination of a DC "blocking" voltage and a complex AC voltage. This modifies the current flowing through the first inductor 38 and the dump resistor 44 and therefore the current transmission path. The current flowing through the current transmission path is modified to take the form of the harmonic current flowing in the DC power transmission lines 26,28, thus effectively injecting an anti-phase version of the harmonic current into the DC power transmission lines 26,28.

As such, the fifth control circuit 420 is able to cancel out the harmonic current, thus resulting in a DC current that is free of the harmonic current in the DC power transmission lines 26,28.

In the energy removal mode, the control unit 46 selectively removes each first capacitor from the current transmission path to generate a DC voltage waveform across the current transmission path. This causes a DC current to flow from the DC power transmission lines 26,28 through the current transmission path and into the dump resistor 44. This permits energy dissipation via the dump resistor 44 so as to remove excess energy from the DC power transmission lines 26,28.

In this manner the fifth control circuit 420 provides a simpler configuration that is capable of operating in both the filtering and energy removal modes.

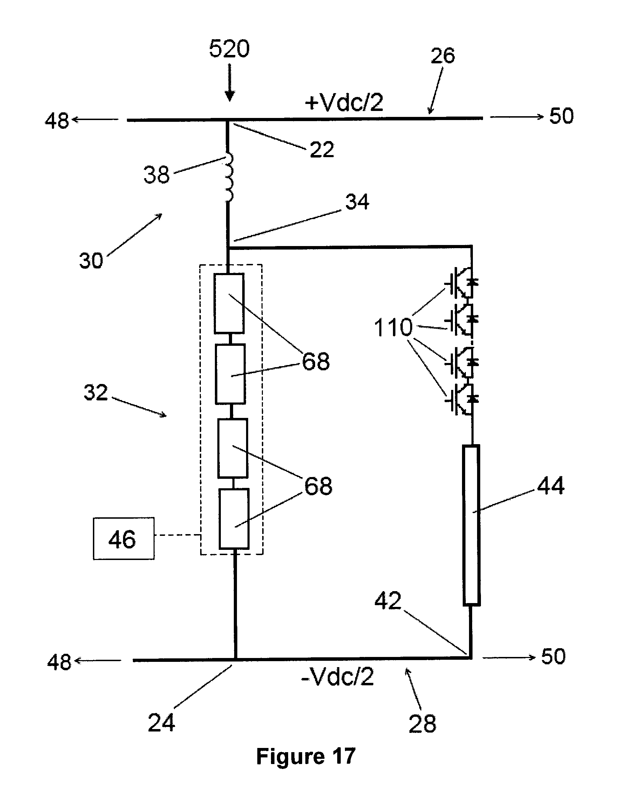

A sixth control circuit 520 according to a sixth embodiment of the invention is shown in Figure 17. The sixth control circuit 520 shown in Figure 17 is similar in structure to the second control circuit 120 shown in Figure 6, and like features share the same reference numerals.

The sixth control circuit 520 differs from the second control circuit 120 in that:
- the sixth control circuit 520 omits the plurality of first modules 36;
- the energy conversion block further includes a plurality of series-connected auxiliary switching elements 110 connected in series with the dump resistor 44.

Operation of the sixth control circuit 520 in the filtering and energy removal modes is described as follows.

In the filtering mode, the control unit 46 selectively removes each second capacitor from the current transmission path to generate a voltage waveform across the plurality of second modules 68 and thereby modulate a voltage across the first inductor 38. The voltage waveform generated across the plurality of second modules 38 consists of a combination of a DC "blocking" voltage and a complex AC voltage. This modifies the current flowing through the first inductor 38 and therefore the current transmission path. The current flowing through the current transmission path is modified to take the form of the harmonic current flowing in the DC power transmission lines 26,28, thus effectively injecting an anti-phase version of the harmonic current into the DC power transmission lines 26,28.

As such, the sixth control circuit 520 is able to cancel out the harmonic current, thus resulting in a DC current that is free of the harmonic current in the DC power transmission lines 26,28.

In the filtering mode, each auxiliary switching element 110 is switched to an off-state to inhibit flow of current in the dump resistor 44 to minimise energy losses.

In the energy removal mode, each auxiliary switching element 110 is switched to an on-state to permit flow of current in the dump resistor 44. At this stage the control unit 46 selectively removes each second capacitor from the second current transmission path portion to modify the voltage at the third terminal 34 to allow soft-switching of each auxiliary switching element 110 when each auxiliary switching element 110 is switched to an on-state.

Switching of each auxiliary switching element 110 to an on-state causes a DC current to flow from the DC power transmission lines 26,28 through the current transmission path and into the dump resistor 44. This permits energy dissipation via the dump resistor 44 so as to remove excess energy from the DC power transmission lines 26,28.

After the DC power transmission lines 26,28 have resumed normal operation and the sixth control circuit 520 is no longer required to operated in the energy removal mode, each auxiliary switching element 110 is switched back to an off-state to inhibit flow of current in the dump resistor 44 before the sixth control circuit 520 resumes its filtering mode. At this stage the control unit 46 selectively removes each second capacitor from the second current transmission path portion to modify the voltage at the third terminal 34 to allow soft-switching of each auxiliary switching element 110 when each auxiliary switching element 110 is switched back to an off-state.

In this manner the sixth control circuit 520 also provides a simpler configuration that is capable of operating in both the filtering and energy removal modes.

It will be appreciated that the second current transmission path portion 32 can be configured to have a lower rating than the plurality of series-connected auxiliary switching elements 110 so as to provide reductions in terms of losses, cost and footprint. This is because selective removal of each second capacitor from the current transmission path is only used in the active filtering operation of the sixth control circuit 520 and is not essential to control the removal of energy from the DC power transmission lines 26,28.

It is envisaged that, in other embodiments of the invention, each auxiliary switching element may be replaced by an auxiliary module to control flow of current in the dump resistor, each auxiliary module including at least one auxiliary energy storage device. Preferably each auxiliary module includes at least one auxiliary switching element to selectively direct current through the or each auxiliary energy storage device or cause current to bypass the or each auxiliary energy storage device.

Each auxiliary module may be configured to have bidirectional current capability. For example, each auxiliary module may be configured to have bidirectional current capability in the same manner as the first and second modules of the current transmission path as set out above in the earlier embodiments.

Further optionally each auxiliary switching element may be replaced by an auxiliary module that is configured to have unidirectional current capability, i.e. the or each auxiliary module is configured to be capable of conducting current in only one direction. For example, each auxiliary module may include first and second sets of series-connected current flow control elements, each set of current flow control elements including an active switching element to selectively direct current through the or each auxiliary energy storage device and a passive current check element to limit current flow through the auxiliary module to a single direction, the first and second sets of series-connected current flow control elements and the or each auxiliary energy storage device being arranged in a full-bridge arrangement to define a 2-quadrant bipolar rationalised module that can provide zero, positive or negative voltage while conducting current in a single direction.

In other embodiments of the invention (not shown), it is envisaged that one or more of the switching elements may be a different switching device such as a gate turn-off thyristor, a field effect transistor, an injection-enhanced gate transistor, an integrated gate commutated thyristor or any other self-commutated semiconductor device. In each instance, the switching device is connected in parallel with an anti-parallel diode.

It is envisaged that, in other embodiments of the invention (not shown), the capacitor in each module may be replaced by a different energy storage device such as a fuel cell, a battery or any other energy storage device capable of storing and releasing its electrical energy to provide a voltage.

It is further envisaged that, in other embodiments of the invention, the control circuit may be operated in the filtering mode only. In such embodiments, the control circuit may omit the energy conversion block.

It is envisaged that, in other embodiments of the invention (not shown), the current transmission path may further include at least one additional energy storage device connected in series with each module of the current transmission path. In the filtering mode of the control circuit, the or each additional energy storage device provides a DC voltage while the control unit selectively removes each energy storage device from the current transmission path to generate an AC voltage. The inclusion of the or each additional energy storage device permits reduction of the voltage rating of each module, thus providing further savings in terms of hardware footprint and cost without adversely affecting the active filtering operation of the control circuit.

## Claims

1. A control circuit comprising:
first and second terminals for respective connection to first and second power transmission lines;
a current transmission path extending between the first and second terminals, the current transmission path including at least one module, the or each module including at least one energy storage device, the current transmission path including at least one inductor; and
a control unit which selectively removes the or each energy storage device of the or each module from the current transmission path to modulate a voltage across the or each inductor in a filtering mode to modify current flowing through the current transmission path and thereby filter one or more current components from the power transmission lines.

2. A control circuit according to Claim 1 wherein at least one module further includes at least one primary switching element to selectively direct current through the or each energy storage device or cause current to bypass the or each energy storage device.

3. A control circuit according to any preceding claim further including at least one energy conversion element, wherein the control unit selectively removes the or each energy storage device of the or each module from the current transmission path in an energy removal mode to cause current to flow from the power transmission lines through the current transmission path and into the or each energy conversion element to remove energy from the power transmission lines.

4. A control circuit according to any preceding claim wherein the current transmission path has first and second current transmission path portions separated by a third terminal, either or both of the first and second current transmission path portions including at least one module;
wherein the control circuit further includes:
an auxiliary terminal for connection to ground or the second power transmission line;
an energy conversion block for removing energy from the power transmission lines in an energy removal mode, the energy conversion block extending between the third and auxiliary terminals such that the energy conversion block branches from the current transmission path, the energy conversion block including at least one energy conversion element; and
a control unit which selectively removes the or each energy storage device of the or each module from the current transmission path.

5. A control circuit according to Claim 4 wherein the first current transmission path portion includes at least one inductor and/or the second current transmission path portion includes at least one inductor.

6. A control circuit according to Claim 4 or Claim 5 wherein the first current transmission path portion includes at least one first module, the or each first module including at least one first energy storage device.

7. A control circuit according to Claim 6 wherein at least one first module includes at least one primary switching element to selectively direct current through the or each first energy storage device or cause current to bypass the or each first energy storage device.

8. A control circuit according to any of Claims 4 to 7 wherein the second current transmission path portion includes at least one primary switching block which is switchable to selectively permit or inhibit flow of current in the second transmission path portion.

9. A control circuit according to Claim 8 wherein at least one primary switching block includes at least one secondary switching element.

10. A control circuit according to Claim 8 or Claim 9 wherein at least one primary switching block includes a second module, the second module including at least one second energy storage device.

11. A control circuit according to Claim 10 wherein at least one second module includes at least one primary switching element to selectively direct current through the or each second energy storage device or cause current to bypass the or each second energy storage device.

12. A control circuit according to any of Claims 8 to 11 wherein the control unit selectively switches the or each primary switching block in the filtering mode to allow current to flow in the second current transmission path portion and thereby bypass the or each energy conversion element.

13. A control circuit according to Claim 12 when dependent from Claim 9 wherein the control unit selectively switches the or each secondary switching element to an on-state in the filtering mode to allow current to flow in the second current transmission path portion and thereby bypass the or each energy conversion element.

14. A control circuit according to Claim 12 when dependent from Claim 10 or Claim 11 wherein the control unit selectively removes the or each second energy storage device from the second current transmission path portion in the filtering mode to allow current to flow in the second current transmission path portion and thereby bypass the or each energy conversion element.

15. A control circuit according to any of Claims 9 to 14 wherein the control unit selectively switches the or each primary switching block in the energy removal mode to block or minimise current flowing through the second current transmission path portion and thereby cause current to be directed into the or each energy conversion element.

16. A control circuit according to Claim 15 when dependent from Claim 9 wherein the control unit selectively switches the or each secondary switching element to an off-state in the energy removal mode to block current flowing through the second current transmission path portion and thereby cause current to be directed into the or each energy conversion element.

17. A control circuit according to Claim 15 when dependent from Claim 11 wherein the control unit selectively switches the or each primary switching element in the or each second module in the energy removal mode to block or minimise current flowing through the second current transmission path portion and thereby cause current to be directed into the or each energy conversion element.

18. A control unit according to Claim 10 or Claim 11 when dependent from Claim 6 or Claim 7 wherein the control unit selectively removes the or each energy storage device of each module from the first and second current transmission path portions in the filtering mode to modify the voltage at the third terminal to block or minimise current in the or each energy conversion element.

19. A control circuit according to Claim 10, Claim 11 or Claim 15 when dependent from Claim 6 or Claim 7 wherein the control unit selectively removes the or each energy storage device of each module from the first and second current transmission path portions in the energy removal mode to generate an AC voltage waveform across the or each energy conversion element.

20. A control circuit according to Claim 19 wherein the control unit selectively removes the or each energy storage device of the or each module from the first and second current transmission path portions in the energy removal mode to generate a square voltage waveform across each of the first and second current transmission path portions and thereby generate an AC voltage waveform across the or each energy conversion element.

21. A control circuit according to any of Claims 4 to 20 wherein the energy conversion block further includes at least one auxiliary switching block which is switchable to selectively inhibit flow of current in the or each energy conversion element in the filtering mode or permit flow of current in the or each energy conversion element in the energy removal mode.

22. A control circuit according to Claim 21 wherein at least one auxiliary switching block includes at least one auxiliary switching element.

23. A control circuit according to Claim 21 or Claim 22 wherein at least one auxiliary switching block includes an auxiliary module, the auxiliary module including at least one auxiliary energy storage device.

24. A control circuit according to Claim 23 wherein at least one auxiliary module includes at least one auxiliary switching element to selectively direct current through the or each auxiliary energy storage device or cause current to bypass the or each auxiliary energy storage device.

25. A control circuit according to any of Claims 21 to 24 when dependent from Claim 10 or Claim 11 wherein the control unit selectively removes each second energy storage device from the second current transmission path portion to modify the voltage at the third terminal to allow soft-switching of the or each auxiliary switching block when the or each auxiliary switching block is switched.

26. A control circuit according to any preceding claim wherein the current transmission path further includes at least one additional energy storage device connected in series with the or each module.
